# EUROPEAN PATENT APPLICATION

(11) **EP 4 601 164 A1**
(43) Date of publication of application: **13.08.2025**
(21) Application number: 24220184.6
(22) Date of filing: 16.12.2024
(51) Int. Cl.: H02K 1/28, H02K 7/02

(54) **DISK GENERATOR INTEGRATED WITH FLYWHEEL, HYBRID POWERTRAIN, AND VEHICLE**

(30) Priority: 08.02.2024 CN 202410178195
(71) Applicant: Huawei Digital Power Technologies Co., Ltd., Shenzhen, Guangdong 518043 (CN)
(72) Inventor: CHENG, Li, Shenzhen, 518043 (CN); CHAOQIANG, Wu, Shenzhen, 518043 (CN); CHUANPING, Liu, Shenzhen, 518043 (CN)
(74) Representative: Gill Jennings & Every LLP

(57) **Abstract**

This application provides a disk generator integrated with a flywheel, a hybrid powertrain, and a vehicle. The disk generator includes the flywheel, a rotor, and a stator that are sequentially arranged adjacent to each other in an axial direction of the generator. The flywheel is configured to: be in transmission connection with an engine, and drive the rotor to rotate through a torsional vibration damper, and the torsional vibration damper includes a drive disk and a plurality of circumferential buffer members. One of an end face that is of the rotor and that faces the flywheel or an end face that is of the flywheel and that faces the rotor includes a groove, and the other end face is configured to fasten the drive disk of the torsional vibration damper. The groove is configured to accommodate the drive disk and the plurality of circumferential buffer members, and the circumferential buffer member is configured to elastically connect the drive disk to the groove in a circumferential direction of the drive disk. The groove is configured to fasten one end of the plurality of circumferential buffer members, and the drive disk is configured to fasten the other end of the plurality of circumferential buffer members. In the disk generator in this application, the groove for accommodating the torsional vibration damper is disposed on the flywheel or the rotor. This implements integrated arrangement of the flywheel and the rotor, and reduces an overall volume on the premise of ensuring transmission efficiency.

## Description

### TECHNICAL FIELD

This application relates to the field of vehicle technologies, and specifically, to a disk generator integrated with a flywheel, a hybrid powertrain, and a vehicle.

### BACKGROUND

In a range extended electric vehicle, an engine drives a generator to generate electricity, and the engine is in transmission with the generator through a flywheel disk. A structure in which the engine, the flywheel disk, and the generator are sequentially in transmission is complex and has a large volume. This affects transmission efficiency and power density of the generator, and is difficult to implement miniaturization.

### SUMMARY

This application provides a disk generator integrated with a flywheel, a hybrid powertrain, and a vehicle. A groove is disposed on the flywheel or a rotor to accommodate a torsional vibration damper, to implement integrated arrangement of the flywheel and the rotor, and reduce an overall volume on the premise of ensuring transmission efficiency. This application specifically includes the following solutions.

According to a first aspect, this application provides a disk generator integrated with a flywheel. The disk generator includes the flywheel, a stator, and a rotor, the flywheel, the rotor, and the stator are sequentially arranged adjacent to each other in an axial direction of the generator, the flywheel is configured to: be in transmission connection with an engine, and drive the rotor to rotate through a torsional vibration damper, and the torsional vibration damper includes a drive disk and a plurality of circumferential buffer members.

One of an end face that is of the rotor and that faces the flywheel or an end face that is of the flywheel and that faces the rotor includes a groove, and the other one of the end face that is of the rotor and that faces the flywheel or the end face that is of the flywheel and that faces the rotor is configured to fasten the drive disk of the torsional vibration damper.

The groove is configured to accommodate the drive disk and the plurality of circumferential buffer members, the circumferential buffer member is configured to elastically connect the drive disk to the groove in a circumferential direction of the drive disk, the groove is configured to fasten one end of the plurality of circumferential buffer members, and the drive disk is configured to fasten the other end of the plurality of circumferential buffer members.

In the disk generator integrated with the flywheel in this application, the flywheel is elastically connected to the rotor in the circumferential direction of the generator through the torsional vibration damper, and the torsional vibration damper can filter vibration on an engine side, so that the flywheel can drive, under driving of the engine, the rotor to rotate to implement a power generation function. In the disk generator in this application, the torsional vibration damper is embedded in the groove of the flywheel or the rotor, so that a distance between the flywheel and the rotor in the axial direction of the generator is reduced, and radial sizes of the flywheel and the rotor are controlled. The flywheel and the rotor form a compact integrated arrangement structure, which reduces an overall volume on the premise of ensuring transmission efficiency.

In an implementation, in a circumferential direction of the generator, the plurality of circumferential buffer members are arranged at intervals between an outer peripheral wall of the drive disk and an inner peripheral wall of the groove, and in a radial direction of the generator, two ends of each circumferential buffer member are respectively fastened to the inner peripheral wall of the groove and the outer peripheral wall of the drive disk.

In this implementation, the drive disk is arranged in parallel with the plurality of circumferential buffer members in a direction perpendicular to the axial direction of the generator. The plurality of circumferential buffer members are accommodated between the outer peripheral wall of the drive disk and the inner peripheral wall of the groove in the radial direction of the generator, and the torsional vibration damper is compactly accommodated in the groove. This helps control an overall volume.

In an implementation, at least one of the inner peripheral wall of the groove or the outer peripheral wall of the drive disk includes a plurality of radial stoppers, and each radial stopper is configured to fasten one end of one circumferential buffer member; and
the plurality of radial stoppers on the inner peripheral wall of the groove or the outer peripheral wall of the drive disk are arranged at intervals in the circumferential direction of the generator.

In this implementation, in the radial direction of the generator, the radial stoppers are located between the outer peripheral wall of the drive disk and the inner peripheral wall of the groove, so that the radial stopper can be fastened to an end part of the circumferential buffer member in the circumferential direction of the generator, and the radial stopper transfers torque to the rotor under driving of the circumferential buffer member.

In an implementation, in the radial direction of the generator, a distance between each radial stopper on the inner peripheral wall of the groove and an axis of the drive disk is less than a distance between each radial stopper on the outer peripheral wall of the drive disk and the axis of the drive disk.

In this implementation, the radial stopper on the inner peripheral wall of the groove at least partially overlaps the radial stopper on the outer peripheral wall of the drive disk in the radial direction of the generator, and force exerted to two opposite ends of the circumferential buffer member is balanced. This can improve transmission efficiency of the torsional vibration damper.

In an implementation, in an axial direction of the engine, the plurality of radial stoppers on the inner peripheral wall of the groove and the plurality of radial stoppers on the outer peripheral wall of the drive disk are arranged at intervals, and a sum of a thickness of the radial stopper on the inner peripheral wall of the groove and a thickness of the radial stopper on the outer peripheral wall of the drive disk is less than a depth of the groove.

In this implementation, a gap is reserved between the radial stopper on the inner peripheral wall of the groove and the radial stopper on the outer peripheral wall of the drive disk in the axial direction of the generator. This avoids interference between radial stoppers on both sides in a process in which the drive disk rotates relative to the groove, and increases a rotation angle of the drive disk in the groove, to achieve better vibration damping effect.

In an implementation, in the circumferential direction of the generator, widths of the radial stoppers are equal, and in the radial direction of the generator, each radial stopper on the inner peripheral wall of the groove is aligned with one radial stopper on the outer peripheral wall of the drive disk.

In this implementation, in the circumferential direction of the generator, side walls on two opposite sides of the radial stopper on the inner peripheral wall of the groove are respectively flush with side walls on two opposite sides of the radial stopper on the outer peripheral wall of the drive disk, so that more accommodation space may be reserved for the circumferential buffer member, a quantity of circumferential buffer members is reduced, and a circumferential length of each circumferential buffer member is increased.

In an implementation, each circumferential buffer member includes a circumferential spring and two sliding blocks, the two sliding blocks are respectively fastened to two ends of the circumferential spring, the circumferential spring is configured to elastically connect the two sliding blocks, one of the two sliding blocks is configured to fasten the radial stopper on the inner peripheral wall of the groove, and the other sliding block is configured to fasten the radial stopper on the outer peripheral wall of the drive disk.

In this implementation, the two sliding blocks are elastically connected through the circumferential spring, and torque of rotation of the flywheel is buffered by the circumferential spring and then acts on the two sliding blocks, and is separately transferred to the radial stopper on the inner peripheral wall of the groove and the radial stopper on the outer peripheral wall of the drive disk, to implement a function of driving the rotor to rotate by the flywheel.

In an implementation, the circumferential spring is a compression spring, and the two sliding blocks slide in the circumferential direction of the generator and respectively abut the radial stopper on the inner peripheral wall of the groove and the radial stopper on the outer peripheral wall of the drive disk, to implement a torque transfer function.

In an implementation, the circumferential spring is a tension spring, the two sliding blocks slide in the circumferential direction of the generator and are respectively fastened to the radial stopper on the inner peripheral wall of the groove and the radial stopper on the outer peripheral wall of the drive disk, and the circumferential spring pulls the two sliding blocks to implement a torque transfer function.

In an implementation, at least one circumferential spring includes a plurality of segments of sub-springs, the plurality of segments of sub-springs are sequentially arranged in the circumferential direction of the generator, the circumferential buffer member includes a middle sliding block, and the middle sliding block is arranged between two adjacent segments of sub-springs in the circumferential direction of the generator.

In this implementation, the circumferential spring is divided into the plurality of segments of sub-springs in the circumferential direction of the generator, and the middle sliding block is embedded between adjacent sub-springs. This can improve overall stiffness of the circumferential spring, avoid a case in which the circumferential spring is overloaded and fails due to an excessively large compression amount, and ensure reliable torque transfer.

In an implementation, in the axial direction of the generator, a thickness of the sliding block is greater than a distance between the radial stopper on the outer peripheral wall of the drive disk and a bottom of the groove.

In this implementation, the radial stopper on the groove is close to the bottom of the groove in the axial direction of the generator. This facilitates processing of the radial stopper on the groove. The sliding block is attached to the bottom of the groove, and the thickness of the sliding block exceeds the distance between the radial stopper on the outer peripheral wall of the drive disk and the bottom of the groove, to ensure that the sliding block is at least partially attached to the radial stopper on the outer peripheral wall of the drive disk in the axial direction of the generator. This ensures that torque is reliably transferred between the radial stopper on the inner peripheral wall of the groove and the radial stopper on the outer peripheral wall of the drive disk.

In an implementation, in the axial direction of the generator, the thickness of the sliding block is less than or equal to the depth of the groove, and is greater than or equal to the sum of the thickness of the radial stopper on the inner peripheral wall of the groove and the thickness of the radial stopper on the outer peripheral wall of the drive disk.

In this implementation, the sliding block is attached to the bottom of the groove, and control on the thickness of the sliding block can ensure that the groove completely accommodates the sliding block, thereby reducing an axial gap between the flywheel and the rotor. The thickness of the sliding block is greater than or equal to the sum of the thickness of the radial stopper on the inner peripheral wall of the groove and the thickness of the radial stopper on the outer peripheral wall of the drive disk, so that it can be ensured that the sliding block is completely attached to the radial stopper on the inner peripheral wall of the groove and the radial stopper on the outer peripheral wall of the drive disk, to effectively transfer torque.

In an implementation, in the axial direction of the generator, the thickness of the sliding block is less than or equal to the depth of the groove, and is greater than or equal to a sum of the thickness of the radial stopper on the inner peripheral wall of the groove, the thickness of the radial stopper on the outer peripheral wall of the drive disk, and a spacing between the radial stopper on the inner peripheral wall of the groove and the radial stopper on the outer peripheral wall of the drive disk.

In an implementation, the generator includes a housing, and the housing includes a sleeve and an end cover that are connected;
the end cover is arranged on a side that is of the stator and that is away from the rotor in the axial direction of the generator, and the end cover is configured to fasten the stator; and
the sleeve is sleeved on peripheries of the stator, the rotor, and the flywheel, an axial length of the sleeve is greater than a spacing between the flywheel and the end cover, and the sleeve is configured to shield an axial gap between the rotor and the flywheel.

In this implementation, the housing accommodates the stator, the rotor, and the flywheel, so that the generator and the flywheel are integrated. The sleeve of the housing shields the axial gap between the rotor and the flywheel, to protect the torsional vibration damper.

In an implementation, the generator includes a motor shaft; in the axial direction of the generator, one end of the motor shaft is configured to pass through the stator and is rotatably connected to the housing, and the other end includes a bearing accommodating hole; and the bearing accommodating hole is configured to accommodate a bearing; and
the end face that is of the rotor and that faces the flywheel includes the groove, and the bearing is configured to be in coaxial transmission with the drive disk; or
the end face that is of the flywheel and that faces the rotor includes the groove, and the bearing is configured to be in coaxial transmission with the flywheel.

In this implementation, the rotor is rotatably connected to the housing through the motor shaft, and the flywheel is rotatably connected to the rotor through the motor shaft. When the groove is located on the end face that is of the rotor and that faces the flywheel, the flywheel is fastened to the drive disk, and the flywheel is in coaxial transmission with the bearing of the motor shaft through the drive disk. When the groove is located on the end face that is of the flywheel and that faces the rotor, the rotor is fastened to the drive disk, and the flywheel is directly in coaxial transmission with the bearing of the motor shaft.

In an implementation, the end cover includes an axial connection column, and the axial connection column extends into an inner hole of the stator in the axial direction of the generator and is in coaxial transmission with the motor shaft.

In an implementation, the motor shaft extends into an inner hole of the axial connection column, and is rotatably connected to the axial connection column through the bearing.

In an implementation, the motor shaft is rotatably connected to the axial connection column through at least two bearings, and the at least two bearings are arranged at intervals in the axial direction of the generator.

In an implementation, the stator includes a stator core and a plurality of electromagnetic coils, the stator core is configured to fasten the end cover of the housing, the stator core includes a plurality of coil grooves, each coil groove is configured to accommodate and fasten one electromagnetic coil, and the plurality of coil grooves are arranged at intervals in a circumferential direction of the stator core.

In an implementation, the rotor includes a rotor backplane and a rotor magnet assembly, a magnet assembly accommodating groove is disposed on an end face that is of the rotor backplane and that faces the stator, and the rotor magnet assembly is fastened in the magnet assembly accommodating groove.

In an implementation, the end face that is of the rotor and that faces the flywheel includes the groove, the bearing is configured to be in coaxial transmission with an axial connection portion of the drive disk, the generator includes a sealing ring, the sealing ring is fastened to the bottom of the groove, an inner diameter of the sealing ring is greater than or equal to an outer diameter of the axial connection portion, the sealing ring is configured to shield a radial gap between the axial connection portion and the rotor.

In this implementation, the groove is located on the end face that is of the rotor and that faces the flywheel, and the axial connection portion of the drive disk passes through the bottom of the groove and is in coaxial transmission with the bearing of the motor shaft. The groove is provided with a lubricant, and the sealing ring is configured to shield a radial gap between the groove and the axial connection portion of the drive disk to seal the groove, to prevent leakage of the lubricant and protect the torsional vibration damper.

In an implementation, the axial connection portion includes a radial boss, the radial boss is located on a side that is of the bearing and that is away from the stator in the axial direction of the generator, and an outer diameter of the radial boss is less than or equal to an outer diameter of an inner ring of the bearing.

In an implementation, the inner diameter of the sealing ring is greater than or equal to an inner diameter of an outer ring of the bearing.

In an implementation, the generator includes a groove cover, the groove cover is located between the flywheel and the rotor in the axial direction of the generator, an outer diameter of the groove cover is greater than a diameter of the inner peripheral wall of the groove, an inner diameter of the groove cover is less than a diameter of the outer peripheral wall of the drive disk, and the groove cover is fastened to a groove opening of the groove and is configured to shield a radial gap between the inner peripheral wall of the groove and the outer peripheral wall of the drive disk.

In this implementation, the groove cover is disposed on a groove opening side of the groove, to shield the radial gap between the outer peripheral wall of the drive disk and the inner peripheral wall of the groove, to seal the groove, prevent leakage of the lubricant, and protect the torsional vibration damper. The groove may be located in the rotor, and in this case, the groove cover is fastened to the rotor. The groove may alternatively be located in the flywheel, and in this case, the groove cover is fastened to the flywheel.

In an implementation, the generator includes an elastic baffle ring, and the elastic baffle ring is located between the groove cover and the drive disk in the axial direction of the generator. In the radial direction of the generator, an outer diameter of the elastic baffle ring is greater than the inner diameter of the groove cover, and an inner diameter of the elastic baffle ring is less than the diameter of the outer peripheral wall of the drive disk. The elastic baffle ring is configured to shield an axial gap between the groove cover and the drive disk, to further seal the groove to prevent leakage of the lubricant.

In an implementation, an end face that is of the drive disk and that faces the groove cover includes an annular stop, and the annular stop is configured to fasten the elastic baffle ring.

In an implementation, the elastic baffle ring is elastic in the axial direction of the generator; and two sides of the elastic baffle ring are respectively configured to abut the drive disk and the groove cover, to implement sealing.

According to a second aspect, this application provides a hybrid powertrain. The hybrid powertrain includes the disk generator provided in any one of the foregoing implementations and at least one of an engine or a drive motor.

A crankshaft of the engine is connected to a flywheel of the disk generator, and the engine is configured to drive the flywheel to drive a rotor of the disk generator to rotate relative to a stator; or
the drive motor is configured to rotate with a crankshaft of the engine, or is configured to drive wheels of a vehicle by using electric energy generated by the disk generator.

According to a third aspect, this application provides a vehicle. The vehicle includes wheels, a power battery, and the hybrid powertrain provided in the second aspect.

An engine of the hybrid powertrain is further configured to directly drive the wheels; and
the power battery is configured to be charged by using electric energy generated by a disk generator.

Because the disk generator provided in the first aspect of this application implements integration of the flywheel and the rotor, the disk generator has a small overall volume. In this way, internal space occupied by the disk generator in the vehicle is reduced. This facilitates miniaturization of the hybrid powertrain, arrangement of internal components of the vehicle, and control on a volume of the vehicle.

### BRIEF DESCRIPTION OF DRAWINGS

To describe technical solutions in this application more clearly, the following briefly describes accompanying drawings for describing implementations. Clearly, the accompanying drawings in the following descriptions are merely some implementations of this application, and a person of ordinary skill in the art may still derive other drawings from these accompanying drawings without creative efforts.
FIG. 1 is a diagram of an outline structure of a disk generator according to an embodiment of this application;
FIG. 2 is a diagram of an exploded structure of a disk generator according to an embodiment of this application;
FIG. 3 is a diagram of a cross-sectional structure of a disk generator according to an embodiment of this application;
FIG. 4 is a diagram of a partial structure of a disk generator according to an embodiment of this application;
FIG. 5 is a diagram of a partial exploded structure of a disk generator according to an embodiment of this application;
FIG. 6 is a diagram of a partial cross-sectional structure of a disk generator according to an embodiment of this application;
FIG. 7 is a diagram of a partial structure of a disk generator according to an embodiment of this application;
FIG. 8 is a diagram of a partial exploded structure of a disk generator according to an embodiment of this application;
FIG. 9 is a diagram of an outline structure of a rotor in a disk generator according to an embodiment of this application;
FIG. 10 is a diagram of an outline structure of a drive disk in a disk generator according to an embodiment of this application;
FIG. 11 is a diagram of a partial cross-sectional structure of a disk generator according to an embodiment of this application;
FIG. 12 is a diagram of a partial cross-sectional structure of a disk generator according to an embodiment of this application;
FIG. 13 is a diagram of an outline structure of a circumferential buffer member in a disk generator according to an embodiment of this application;
FIG. 14 is a diagram of a cross-sectional structure of a disk generator according to an embodiment of this application;
FIG. 15 is a diagram of an outline structure of a motor shaft in a disk generator according to an embodiment of this application;
FIG. 16 is a diagram of a partial exploded structure of a disk generator according to an embodiment of this application;
FIG. 17 is a diagram of a partial cross-sectional structure of a disk generator according to an embodiment of this application;
FIG. 18 is a diagram of an outline structure of a housing in a disk generator according to an embodiment of this application;
FIG. 19 is a diagram of an exploded structure of a motor shaft and bearings in a disk generator according to an embodiment of this application;
FIG. 20 is a diagram of a cross-sectional structure of a motor shaft and bearings in a disk generator according to an embodiment of this application;
FIG. 21 is a diagram of an outline structure of a stator in a disk generator according to an embodiment of this application;
FIG. 22 is a diagram of a partial exploded structure of a disk generator according to an embodiment of this application;
FIG. 23 is a diagram of an exploded structure of a rotor in a disk generator according to an embodiment of this application;
FIG. 24 is a diagram of a partial exploded structure of a disk generator according to an embodiment of this application;
FIG. 25 is a diagram of a partial cross-sectional structure of a disk generator according to an embodiment of this application;
FIG. 26 is a diagram of a partial cross-sectional structure of a disk generator according to an embodiment of this application;
FIG. 27 is a diagram of a partial cross-sectional structure of a disk generator according to an embodiment of this application; and
FIG. 28 is a diagram of a partial cross-sectional structure of a disk generator according to an embodiment of this application.

### DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In this specification, terms such as "first" and "second" are sequence numbers of components, are merely intended to distinguish between the described objects, and do not have any sequential or technical meaning. Unless otherwise specified, a "connection" in this application includes a direct connection and an indirect connection. In descriptions of this application, it should be understood that orientation or position relationships indicated by the terms "above", "below", "front", "back", "top", "bottom", "inside", "outside", and the like are based on orientation or position relationships shown in the accompanying drawings, and are merely intended for ease of describing this application and simplifying descriptions, rather than indicating or implying that a described apparatus or element needs to have a specific orientation or needs to be constructed and operated in a specific orientation. Therefore, such terms shall not be understood as a limitation on this application.

In this application, unless otherwise specified and limited, when a first feature is "above" or "below" a second feature, the first feature may be in direct contact with the second feature, or the first feature may be in indirect contact with the second feature through an intermediate medium. In addition, that the first feature is "above" or "on top of the second feature may be that the first feature is right above or obliquely above the second feature, or merely mean that a horizontal height of the first feature is greater than that of the second feature. That the first feature is "below" or "under" the second feature may be that the first feature is right below or obliquely below the second feature, or merely mean that a horizontal height of the first feature is less than that of the second feature.

This application provides a disk generator integrated with a flywheel. The disk generator includes the flywheel, a stator, and a rotor, the flywheel, the rotor, and the stator are sequentially arranged adjacent to each other in an axial direction of the generator, the flywheel is configured to: be in transmission connection with an engine, and drive the rotor to rotate through a torsional vibration damper, and the torsional vibration damper includes a drive disk and a plurality of circumferential buffer members.

One of an end face that is of the rotor and that faces the flywheel or an end face that is of the flywheel and that faces the rotor includes a groove, and the other one of the end face that is of the rotor and that faces the flywheel or the end face that is of the flywheel and that faces the rotor is configured to fasten the drive disk of the torsional vibration damper.

The groove is configured to accommodate the drive disk and the plurality of circumferential buffer members, the circumferential buffer member is configured to elastically connect the drive disk to the groove in a circumferential direction of the drive disk, the groove is configured to fasten one end of the plurality of circumferential buffer members, and the drive disk is configured to fasten the other end of the plurality of circumferential buffer members.

The disk generator integrated with the flywheel in this application filters vibration on an engine side by using the torsional vibration damper, and the torsional vibration damper is embedded in the groove of the flywheel or the rotor, so that a distance between the flywheel and the rotor in the axial direction of the generator is reduced on the premise of ensuring transmission efficiency, and the flywheel and the rotor form a compact integrated arrangement structure.

This application provides a hybrid powertrain. The hybrid powertrain includes the foregoing disk generator and at least one of an engine or a drive motor. A crankshaft of the engine is connected to a flywheel of the disk generator, and the engine is configured to drive the flywheel to drive a rotor of the disk generator to rotate relative to a stator; or the drive motor is configured to rotate with a crankshaft of the engine, or is configured to drive wheels of a vehicle by using electric energy generated by the disk generator. The foregoing disk generator is used in the hybrid powertrain in this application, thereby facilitating miniaturization of the hybrid powertrain.

This application provides a vehicle, including wheels, a power battery, and the hybrid powertrain provided in the second aspect. An engine of the hybrid powertrain is further configured to directly drive the wheels, and the power battery is configured to be charged by using electric energy generated by a disk generator. A volume of the hybrid powertrain in the vehicle in this application is small, thereby facilitating arrangement of internal components of the vehicle and control on a volume of the vehicle.

In an embodiment, the vehicle further includes a power-consuming device, and the power battery is electrically connected to the power-consuming device. After the power battery is charged by using the electric energy generated by the disk generator, the power battery may supply power to the power-consuming device, to implement a corresponding function of the power-consuming device.

In an embodiment, the hybrid powertrain further includes a reducer. The reducer is in transmission connection between a drive motor and the wheels. The reducer is configured to: adjust output kinetic energy of the drive motor, and transmit processed kinetic energy to the wheels. The reducer increases a power output range of the hybrid powertrain, so that a rotational speed and torque of the wheels can match different use environments of the vehicle in this application, thereby expanding an application scenario of the vehicle in this application.

In an embodiment, the hybrid powertrain further includes a differential. The differential is in transmission connection between the reducer and the wheels. The differential can further adjust kinetic energy output by the reducer, and transmit adjusted kinetic energy to the wheels. The differential can enable kinetic energy transmitted by the hybrid powertrain to two wheels to be different, so that rotational speeds and torque of the two wheels can match different environments in a running process of the vehicle in this application, thereby further expanding the application scenario of the vehicle in this application.

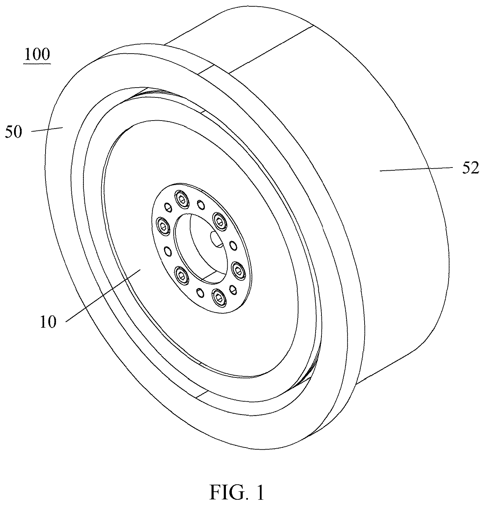

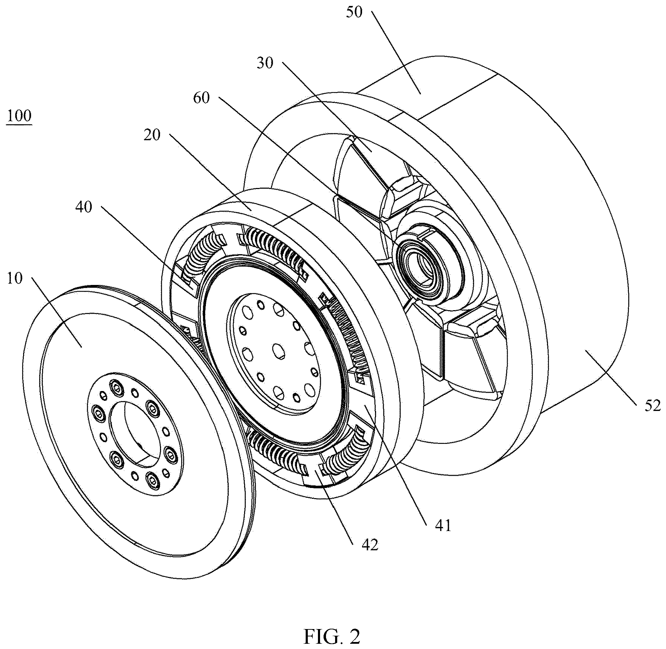

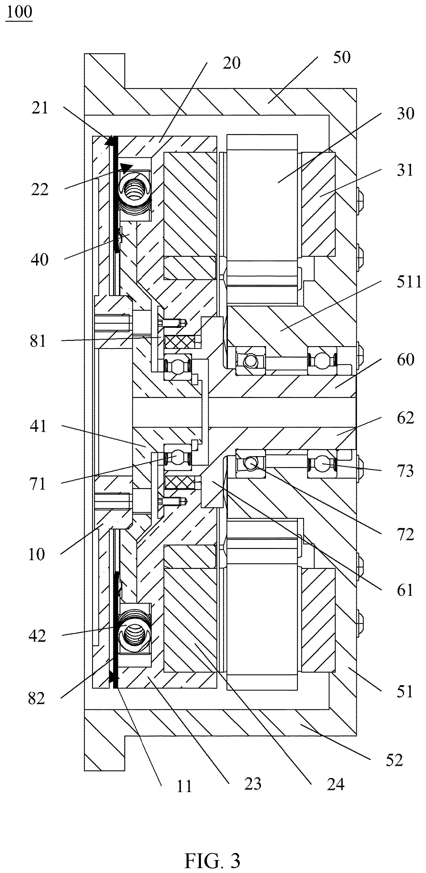

Refer to a diagram that is of an outline structure of a disk generator 100 according to an embodiment of this application and that is shown in FIG. 1, a diagram that is of an exploded structure of the disk generator 100 according to an embodiment of this application and that is shown in FIG. 2, and a diagram that is of a cross-sectional structure of the disk generator 100 according to an embodiment of this application and that is shown in FIG. 3.

As shown in FIG. 1 to FIG. 3, the disk generator 100 in this application includes a flywheel 10, a rotor 20, a stator 30, and a torsional vibration damper 40, and an axis of the flywheel 10, an axis of the rotor 20, and an axis of the stator 30 all coincide with an axis of the disk generator 100 in this application. The flywheel 10, the rotor 20, and the stator 30 are sequentially arranged in an axial direction of the disk generator 100 in this application, and the flywheel 10, the rotor 20, and the stator 30 are spaced from each other in the axial direction of the disk generator 100. The flywheel 10 is configured to rotatably connect to the rotor 20, and the rotor 20 is configured to rotatably connect to the stator 30. Specifically, the torsional vibration damper 40 is configured to rotatably connect the flywheel 10 to the rotor 20.

In an embodiment, the disk generator 100 in this application includes a housing 50, the housing 50 is configured to accommodate and fasten the stator 30, and the housing 50 is further configured to accommodate the rotor 20 and at least a part of the flywheel 10. Specifically, the housing 50 includes an end cover 51 and a sleeve 52 that are connected to each other, the end cover 51 is arranged on a side that is of the stator 30 and that is away from the rotor 20 in the axial direction of the disk generator 100, and the end cover 51 is configured to fasten the stator 30. In a radial direction of the disk generator 100, the sleeve 52 is sleeved on peripheries of the flywheel 10, the rotor 20, and the stator 30.

In an embodiment, the disk generator 100 in this application further includes a motor shaft 60, the motor shaft 60 is configured to rotatably connect to the housing 50, and the motor shaft 60 is further configured to fasten the rotor 20. In other words, the motor shaft 60 is configured to rotatably connect the rotor 20 and the housing 50, to implement rotatable connection between the rotor 20 and the stator 30.

The torsional vibration damper 40 is accommodated in the flywheel 10 or the rotor 20. An end face that is of the flywheel 10 and that is away from the rotor 20 is configured to be in transmission connection with a crankshaft of an engine. In an embodiment, the end face that is of the flywheel 10 and that is away from the rotor 20 is exposed relative to the housing 50, and is fastened to the crankshaft of the engine. When the engine works, the crankshaft drives the flywheel 10 to rotate around the axis of the disk generator 100, the rotating flywheel 10 inputs torque to the torsional vibration damper 40, and the torsional vibration damper 40 processes the torque input by the flywheel 10, transfers processed torque to the rotor 20, and drives the rotor 20 to rotate relative to the stator 30. In this way, a power generation function of the disk generator 100 in this application is implemented.

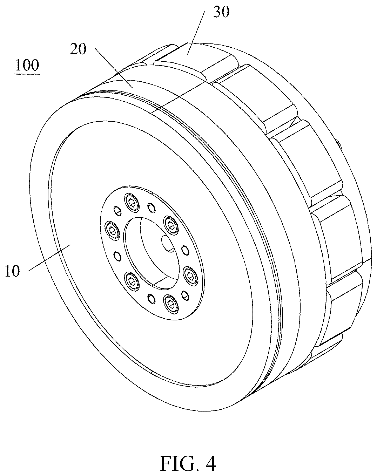

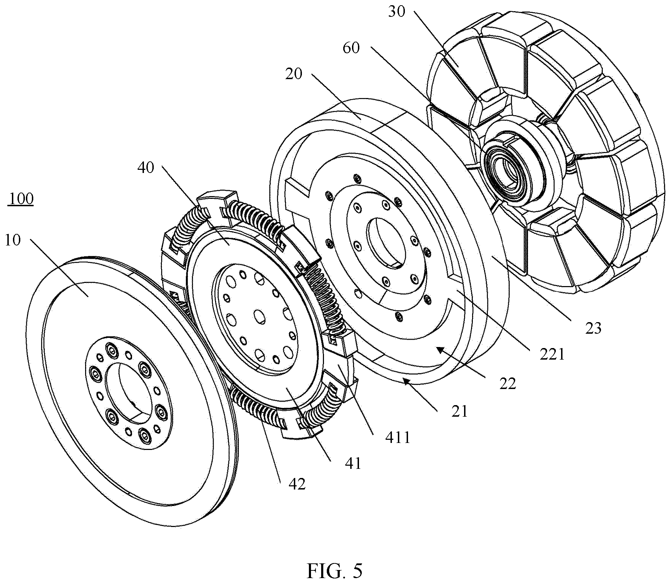

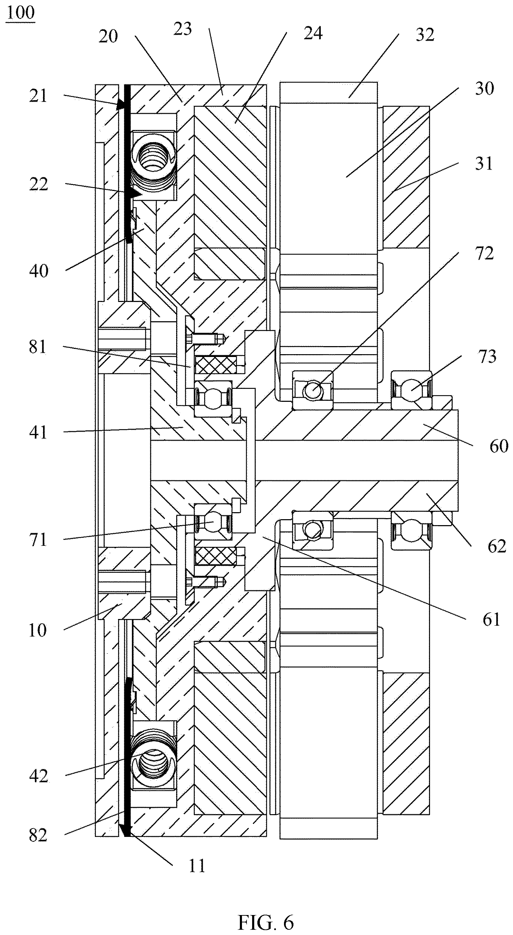

The torsional vibration damper 40 is configured to rotatably connect the flywheel 10 to the rotor 20. For details, refer to a diagram that is of a partial structure of a disk generator 100 according to an embodiment of this application and that is shown in FIG. 4, a diagram that is of a partial exploded structure of the disk generator 100 according to an embodiment of this application and that is shown in FIG. 5, and a diagram that is of a partial cross-sectional structure of the disk generator 100 according to an embodiment of this application and that is shown in FIG. 6. For ease of description, the housing 50 is omitted in FIG. 4 to FIG. 6.

As shown in FIG. 4 to FIG. 6, the rotor 20 has a first end face 21 facing the flywheel 10, the first end face 21 includes a groove 22, and the torsional vibration damper 40 is accommodated in the groove 22. The torsional vibration damper 40 is fastened to the flywheel 10, and is in transmission connection with the rotor 20. A direction of transmission connection between the torsional vibration damper 40 and the rotor 20 is in a circumferential direction of the disk generator 100. When the engine works, the flywheel 10 rotates relative to the housing 50 under driving of the crankshaft, and transfers torque to the rotor 20 through the torsional vibration damper 40, to drive the rotor 20 to rotate relative to the stator 30. In this way, the power generation function is implemented.

The first end face 21 of the rotor 20 and a second end face 11 of the flywheel 10 are disposed opposite to each other. It may be understood that disposing the groove 22 on the first end face 21 and embedding the torsional vibration damper 40 in the groove 22 reduce a spacing between the first end face 21 and the second end face 11 in the axial direction of the disk generator 100 on the premise of ensuring torque transfer effect between the flywheel 10 and the rotor 20, so that a distance between the flywheel 10 and the rotor 20 in the axial direction of the disk generator 100 is reduced, and the flywheel 10 can cooperate with the rotor 20 to form a compact integrated arrangement structure. In this way, an overall volume of the disk generator 100 in this application is further reduced, and a structure of the disk generator 100 in this application is compact.

In an embodiment, as shown in FIG. 4 to FIG. 6, the torsional vibration damper 40 includes a drive disk 41 and circumferential buffer members 42, an end face that is of the drive disk 41 and that faces the flywheel 10 is configured to fasten the second end face 11 that is of the flywheel 10 and that faces the rotor 20, and the circumferential buffer member 42 is configured to elastically connect an outer peripheral wall of the drive disk 41 to an inner peripheral wall of the groove 22 in the circumferential direction of the disk generator 100.

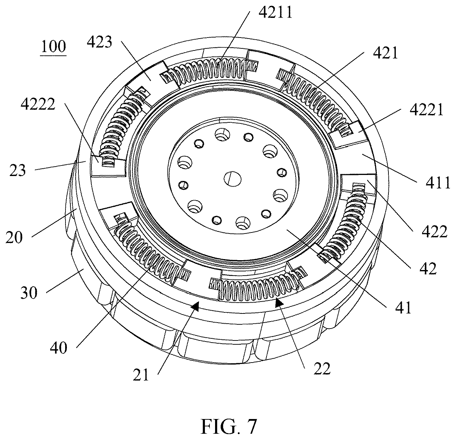

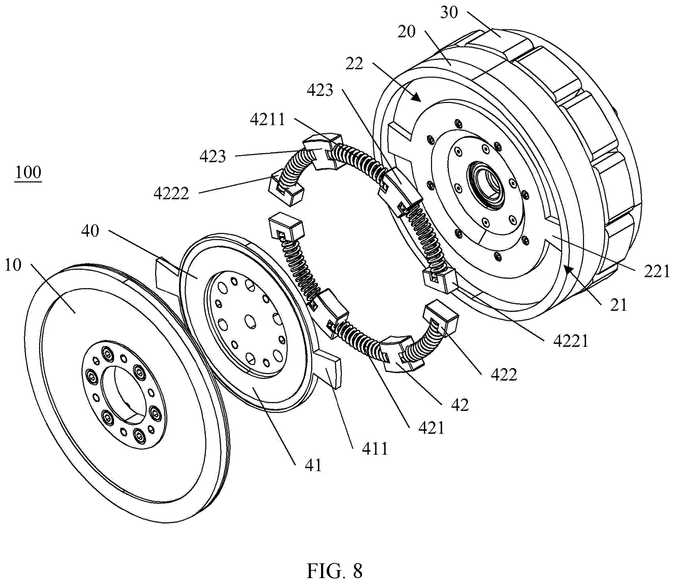

For details, refer to a diagram that is of a partial structure of the disk generator 100 according to an embodiment of this application and that is shown in FIG. 7 and a diagram that is of a partial exploded structure of the disk generator 100 according to an embodiment of this application and that is shown in FIG. 8.

As shown in FIG. 7 and FIG. 8, an axis of the drive disk 41 coincides with the axis of the disk generator 100. The plurality of circumferential buffer members 42 are disposed, and the plurality of circumferential buffer members 42 are arranged at intervals in the circumferential direction of the disk generator 100. In the radial direction of the disk generator 100, two ends of each circumferential buffer member 42 are respectively fastened to the inner peripheral wall of the groove 22 and the outer peripheral wall of the drive disk 41. When the engine works, the flywheel 10 rotates relative to the housing 50 under driving of the crankshaft, and drives the drive disk 41 to rotate relative to the housing 50. The rotating drive disk 41 causes circumferential deformation of the circumferential buffer member 42 in the circumferential direction of the disk generator 100, and the circumferential buffer member 42 transfers, based on the circumferential deformation, torque to the other end of the circumferential buffer member 42 connected to the inner peripheral wall of the groove 22. In this way, the torque is transferred to the rotor 20, and a torque transfer function of the torsional vibration damper 40 is implemented.

Due to an operating characteristic of the engine, torque output by the engine during running may fluctuate, and when the fluctuating torque is transferred to the disk generator 100, vibration and noise may be generated on a side that is of the disk generator 100 and that is close to the engine. Frequent changes of relative rotational speeds between the flywheel 10 and the rotor 20 affect torque transfer effect between the flywheel 10 and the rotor 20. The flywheel 10 frequently collides with the rotor 20 in the circumferential direction of the disk generator 100, reducing a service life of the disk generator 100.

In this embodiment, when the fluctuating torque is transferred to the drive disk 41, the circumferential buffer members 42 can slow down or absorb fluctuation of the torque transferred by the drive disk 41. This reduces impact of fluctuation of the torque on rotation of the rotor 20. This improves running stability of the disk generator 100 in this application, reduces vibration and noise in a running process of the disk generator 100 in this application, and implements a vibration damping function of the torsional vibration damper 40.

In addition, the circumferential buffer members 42 are arranged in the groove 22 in the circumferential direction of the disk generator 100, so that a space occupation ratio of the torsional vibration damper 40 in the radial direction of the disk generator 100 is reduced on the premise of ensuring the torque transfer function of the torsional vibration damper 40, and radial sizes of the flywheel 10 and the rotor 20 are controlled. In addition, a space volume of the disk generator 100 in this application is reduced in the axial direction, and the flywheel 10 and the rotor 20 form an integrated structure with compact arrangement, so that an overall volume of the disk generator 100 in this application can be reduced, and the structure of the disk generator 100 in this application is more compact.

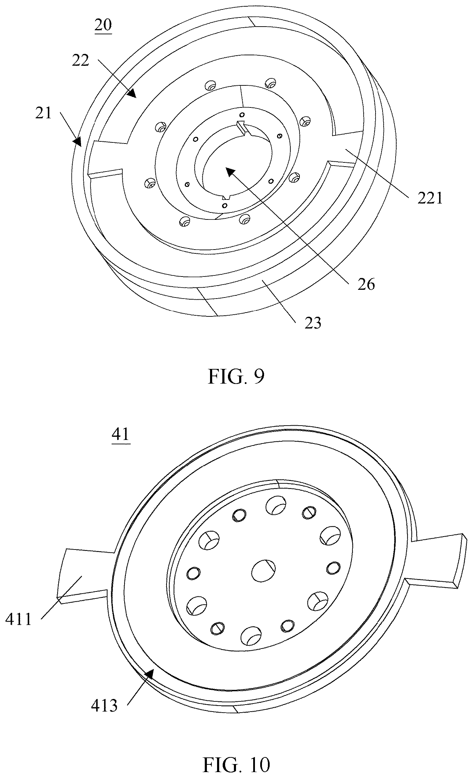

In an embodiment, at least one of the inner peripheral wall of the groove 22 or the outer peripheral wall of the drive disk 41 includes a plurality of radial stoppers, and each radial stopper is configured to fasten one end of one circumferential buffer member 42. For details, refer to a diagram that is of an outline structure of the rotor 20 in the disk generator 100 according to an embodiment of this application and that is shown in FIG. 9 and a diagram that is of an outline structure of the drive disk 41 in the disk generator 100 according to an embodiment of this application and that is shown in FIG. 10. In addition, refer to FIG. 7 and FIG. 8 together.

As shown in FIG. 7 to FIG. 10, a first radial stopper 221 is disposed on the inner peripheral wall of the groove 22, the first radial stopper 221 extends toward the outer peripheral wall of the drive disk 41 in the radial direction of the disk generator 100, a second radial stopper 411 is disposed on the outer peripheral wall of the drive disk 41, and the second radial stopper 411 extends toward the inner peripheral wall of the groove 22 in the radial direction of the disk generator 100. In other words, the radial stoppers extend into a gap between the outer peripheral wall of the drive disk 41 and the inner peripheral wall of the groove 22 in the radial direction of the disk generator 100. Because the gap between the outer peripheral wall of the drive disk 41 and the inner peripheral wall of the groove 22 is used to accommodate the circumferential buffer members 42, the radial stoppers can cooperate with the circumferential buffer members 42 in the circumferential direction of the disk generator 100, to transfer the torque.

A plurality of first radial stoppers 221 and a plurality of second radial stoppers 411 are disposed, and the first radial stoppers 221 and the second radial stoppers 411 are arranged at intervals in the circumferential direction of the disk generator 100. Each first radial stopper 221 and each second radial stopper 411 are configured to fasten one end of one circumferential buffer member 42. In other words, two opposite ends that are of each circumferential buffer member 42 and that are in the circumferential direction of the disk generator 100 are configured to fixedly fit one first radial stopper 221 and one second radial stopper 411. When the engine works, the flywheel 10 rotates relative to the housing 50 under driving of the crankshaft, and drives the drive disk 41 to rotate relative to the housing 50. The drive disk 41 pushes, by using the second radial stopper 411, the circumferential buffer member 42 to deform in the circumferential direction of the disk generator 100, and the circumferential buffer member 42 pushes, based on circumferential deformation, the first radial stopper 221 to rotate around the axis of the disk generator 100, to enable the rotor 20 to rotate relative to the stator 30. In this way, the power generation function of the disk generator 100 in this application is implemented.

In this embodiment, two first radial stoppers 221 are disposed, the two first radial stoppers 221 are evenly arranged in the circumferential direction of the disk generator 100, two second radial stoppers 411 are disposed, and the two second radial stoppers 411 are evenly arranged in the circumferential direction of the disk generator 100. It may be understood that, in some other embodiments, a quantity of first radial stoppers 221, an arrangement manner of the first radial stoppers 221, a quantity of second radial stoppers 411, and an arrangement manner of the second radial stoppers 411 may alternatively be set in a matching manner based on different use requirements of the disk generator 100 in this application. This is not particularly limited in this application.

In an embodiment, as shown in FIG. 7 to FIG. 10, in the radial direction of the disk generator 100, a distance between each first radial stopper 221 and the axis of the rotor 20 is less than a distance between each second radial stopper 411 and the axis of the drive disk 41. Both the axis of the rotor 20 and the axis of the drive disk 41 coincide with the axis of the disk generator 100 in this application. It may be understood that, in the radial direction of the disk generator 100, the first radial stopper 221 at least partially overlaps the second radial stopper 411.

When the first radial stopper 221 is spaced from the second radial stopper 411 in the radial direction of the disk generator 100, force exerted by the second radial stopper 411 on the circumferential buffer member 42 can deform the circumferential buffer member 42 in the circumferential direction of the disk generator 100, and further deviate the circumferential buffer member 42 in the radial direction of the disk generator 100. In other words, limitations imposed by the disk generator 100 in this application on positions of the first radial stopper 221 and the second radial stopper 411 in the radial direction of the disk generator 100 reduce a possibility of a radial deviation of the circumferential buffer member 42 in a working process of the engine, so that force exerted on two opposite ends of each circumferential buffer member 42 is balanced, a torque loss in a process of transferring torque from the second radial stopper 411 to the first radial stopper 221 is reduced, and transmission efficiency of the torsional vibration damper 40 is improved.

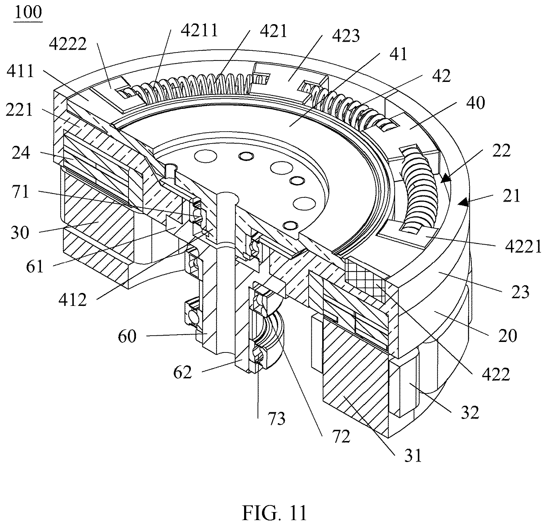

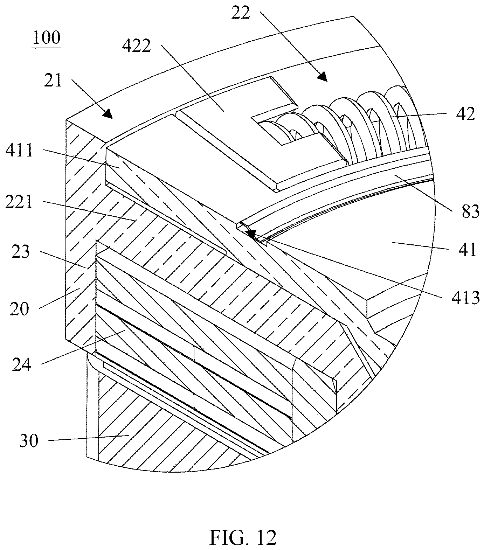

Refer to a diagram that is of a partial cross-sectional structure of the disk generator 100 according to an embodiment of this application and that is shown in FIG. 11 and a diagram that is of a partial cross-sectional structure of the disk generator 100 according to an embodiment of this application and that is shown in FIG. 12. In addition, refer to FIG. 7 to FIG. 10 together. FIG. 12 is a diagram of a partial cross-sectional structure of FIG. 11.

As shown in FIG. 7 to FIG. 12, in the axial direction of the disk generator 100, a sum of a thickness of the first radial stopper 221 and a thickness of the second radial stopper 411 is less than a depth of the groove 22, and the first radial stoppers 221 are spaced from the second radial stoppers 411, to prevent the first radial stoppers 221 and the second radial stoppers 411 from interfering with each other in a rotating process of the drive disk 41 relative to the groove 22, and ensure stable running of the disk generator 100 in this application.

In this embodiment, a gap reserved between the first radial stoppers 221 and the second radial stoppers 411 in the axial direction of the disk generator 100 can further reduce a limitation on rotation of the drive disk 41 in the groove 22. Therefore, a rotation angle of the drive disk 41 in the groove 22 is increased, utilization of the circumferential buffer members 42 is improved, and vibration damping effect of the torsional vibration damper 40 is improved.

In an embodiment, as shown in FIG. 7 to FIG. 12, in the circumferential direction of the disk generator 100, widths of the first radial stoppers 221 and widths of the second radial stoppers 411 are equal, and each first radial stopper 221 is aligned with one second radial stopper 411 in the radial direction of the disk generator 100. It may be understood that, in the circumferential direction of the disk generator 100 in this application, side walls that are of the first radial stopper 221 and the second radial stopper 411 and that are opposite to each other are flush with each other, so that a proportion of accommodation space of the first radial stopper 221 and the second radial stopper 411 in the groove 22 in the circumferential direction of the disk generator 100 is reduced. In this way, a proportion of accommodation space of the circumferential buffer members 42 in the circumferential direction of the disk generator 100 is increased, the circumferential buffer members 42 have large circumferential lengths, and the vibration damping function of the torsional vibration damper 40 is improved.

Each first radial stopper 221 is aligned with one second radial stopper 411 in the radial direction of the disk generator 100, so that a quantity of circumferential buffer members 42 is reduced on the premise of ensuring the vibration damping function and the torque transfer function of the torsional vibration damper 40, thereby reducing costs of the disk generator 100 in this application.

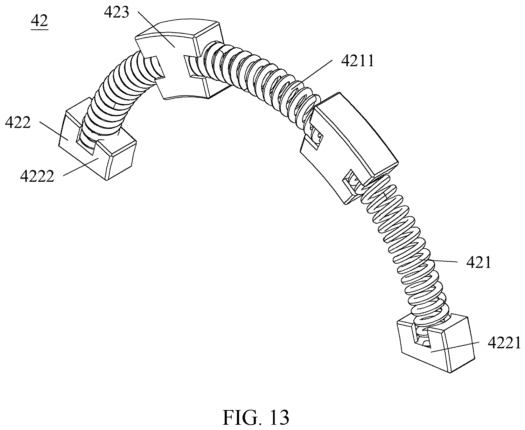

Refer to a diagram that is of an outline structure of the circumferential buffer member 42 in the disk generator according to an embodiment of this application and that is shown in FIG. 13, and refer to FIG. 7 and FIG. 8 together.

As shown in FIG. 7, FIG. 8, and FIG. 13, each circumferential buffer member 42 includes a circumferential spring 421 and two sliding blocks 422. An extension line of the circumferential spring 421 is arc-shaped, and an extension direction of the circumferential spring 421 is the circumferential direction of the disk generator 100. In the circumferential direction of the disk generator 100, two opposite ends of the circumferential spring 421 are respectively fastened to the two sliding blocks 422, and the circumferential spring 421 is configured to elastically connect the two sliding blocks 422.

In the circumferential direction of the disk generator 100, the two sliding blocks 422 are arranged at intervals and are slidably connected to the groove 22. The two sliding blocks 422 are respectively a first sliding block 4221 and a second sliding block 4222, the first sliding block 4221 is configured to fasten the first radial stopper 221, and the second sliding block 4222 is configured to fasten the second radial stopper 411.

When the engine works, the flywheel 10 enables the drive disk 41 to rotate relative to the housing 50 under driving of the crankshaft. The rotating drive disk 41 sequentially transfers torque to the rotor 20 through the second sliding block 4222, the circumferential spring 421, and the first sliding block 4221, so that the rotor 20 rotates relative to the stator 30. In this way, the power generation function of the disk generator 100 in this application is implemented.

As shown in FIG. 7, each first radial stopper 221 is aligned with one second radial stopper 411. It may be understood that, in the circumferential direction of the disk generator 100, each circumferential buffer member 42 is located between two adjacent first radial stoppers 221, and is also located between two adjacent second radial stoppers 411.

Specifically, in an embodiment, the circumferential spring 421 is a compression spring, and the first sliding block 4221 and the second sliding block 4222 respectively abut the first radial stopper 221 and the second radial stopper 411 in the circumferential direction of the disk generator 100. In the circumferential direction of the disk generator 100, the first sliding block 4221 is configured to abut a side wall of the first radial stopper 221, and the second sliding block 4222 is configured to abut a side wall of the second radial stopper 411. The rotating drive disk 41 enables each second radial stopper 411 to rotate around the axis of the disk generator 100, and each second radial stopper 411 may push one second sliding block 4222 to slide toward one first sliding block 4221 in the circumferential direction of the disk generator 100.

A second radial stopper 411 pushes a corresponding second sliding block 4222 to compress a circumferential spring 421 connected to the second sliding block 4222, after the circumferential spring 421 is compressed, the circumferential spring 421 forms pushing force toward a first sliding block 4221 connected to the other side of the circumferential spring 421, and the first sliding block 4221 pushes the first radial stopper 221, so that the first radial stopper 221 rotates around the axis of the disk generator 100, to implement the torque transfer effect.

In a process in which the first sliding block 4221 pushes the first radial stopper 221, the first sliding block 4221 always abuts the first radial stopper 221 in the circumferential direction of the disk generator 100. Therefore, a position between the first sliding block 4221 and the first radial stopper 221 is fixed, that is, the inner peripheral wall (the first radial stopper 221) of the groove 22 is configured to fasten one end (the first sliding block 4221) of the circumferential buffer member 42. Correspondingly, in a process in which the second radial stopper 411 pushes the second sliding block 4222, the second sliding block 4222 always abuts the second radial stopper 411 in the circumferential direction of the disk generator 100. Therefore, a position between the second sliding block 4222 and the second radial stopper 411 is fixed, that is, the outer peripheral wall (the second radial stopper 411) of the drive disk 41 is configured to fasten to the other end (the second sliding block 4222) of the circumferential buffer member 42.

In another embodiment, the circumferential spring 421 is a tension spring, and the first sliding block 4221 and the second sliding block 4222 are respectively fastened to the first radial stopper 221 and the second radial stopper 411 in the circumferential direction of the disk generator 100. The rotating drive disk 41 enables each second radial stopper 411 to rotate around the axis of the disk generator 100, and each second radial stopper 411 may pull one sliding block 422 to slide in the circumferential direction of the disk generator 100.

Each second radial stopper 411 may pull a corresponding second sliding block 4222 to stretch a circumferential spring 421 connected to the second sliding block 4222, after the circumferential spring 421 is stretched, the circumferential spring 421 pulls a first sliding block 4221 connected to the other side of the circumferential spring 421, and the first sliding block 4221 pulls a first radial stopper 221, so that the first radial stopper 221 rotates around the axis of the disk generator 100, to implement the torque transfer effect.

In a process in which the first sliding block 4221 pulls the first radial stopper 221, the first sliding block 4221 is always attached to the first radial stopper 221 in the circumferential direction of the disk generator 100. Therefore, the first sliding block 4221 is fastened to the first radial stopper 221, that is, the inner peripheral wall (the first radial stopper 221) of the groove 22 is configured to fasten one end (the first sliding block 4221) of the circumferential buffer member 42. Correspondingly, in a process in which the second radial stopper 411 pulls the second sliding block 4222, the second sliding block 4222 is always attached to the second radial stopper 411 in the circumferential direction of the disk generator 100. Therefore, the second sliding block 4222 is fastened to the second radial stopper 411, that is, the outer peripheral wall (the second radial stopper 411) of the drive disk 41 is configured to fasten the other end (the second sliding block 4222) of the circumferential buffer member 42.

In an embodiment, the sliding block 422 is a damping sliding block, so that when fluctuating torque is transferred to the sliding block 422, damping in the sliding block 422 can absorb fluctuation in the torque. This further reduces vibration and noise in a running process of the disk generator 100 in this application, and implements the vibration damping function of the torsional vibration damper 40. In another embodiment, the bottom of the groove 22 may be further disposed in a matching manner as a friction surface with a specific roughness based on an actual use requirement of the torsional vibration damper 40. In this way, friction force between the sliding block 422 and the bottom of the groove 22 is used to eliminate fluctuation in torque transferred to the sliding block 422 through the crankshaft.

In an embodiment, as shown in FIG. 7, FIG. 8, and FIG. 13, at least one circumferential spring 421 includes a plurality of segments of sub-springs 4211, and the plurality of segments of sub-springs 4211 are sequentially arranged in the circumferential direction of the disk generator 100. The circumferential buffer member 42 further includes a middle sliding block 423, and the middle sliding block 423 is embedded between two adjacent segments of sub-springs 4211 in the circumferential direction of the disk generator 100.

For the circumferential spring 421, when the circumferential spring 421 is compressed or stretched by external force, and the external force causes the circumferential spring 421 to deform in a direction of the extension line of the circumferential spring 421, the circumferential spring 421 is deformed in a radial direction of curvature of the extension line of the circumferential spring 421. When the extension line of the circumferential spring 421 is excessively long, and external force exerted on one side of the circumferential spring 421 is transferred to the other side in the direction of the extension line of the circumferential spring 421, the external force transferred to the other side decreases as a length of the extension line of the circumferential spring 421 increases.

Therefore, the circumferential spring 421 is divided into the plurality of segments of sub-springs 4211 in the circumferential direction of the disk generator 100, and the middle sliding block 423 is embedded between adjacent sub-springs 4211, so that force transmission effect is not affected because the circumferential spring 421 is excessively long on the premise of ensuring circumferential force transmission effect of the circumferential spring 421. In this embodiment, the circumferential spring 421 needs to be disposed as a compression spring or a tension spring. It may be understood that disposing of the plurality of segments of sub-springs 4211 can avoid a case in which the circumferential spring 421 is overloaded and fails due to an excessively large compression amount or an excessively large stretching amount, and ensure reliability of torque transferred by the second sliding block 4222 to the first sliding block 4221 through the circumferential spring 421.

In addition, disposing of the middle sliding block 423 can improve overall stiffness of the circumferential spring 421 on the premise of ensuring torque transfer of the circumferential spring 421, avoid a case in which the circumferential spring 421 is overloaded and fails due to an increase in a compression amount or a stretching amount in a working process, and further ensure reliability of torque transfer of the torsional vibration damper 40.

In this embodiment, the middle sliding block 423 is embedded between two adjacent segments of sub-springs 4211. Each middle sliding block 423 is slidably connected to the groove 22, and each middle sliding block 423 may slide in the circumferential direction of the disk generator 100. It may be understood that sliding connection between the middle sliding block 423 and the groove 22 limits displacement of the middle sliding block 423 in the radial direction of the disk generator 100. In this way, displacement of each segment of sub-spring 4211 connected to the middle sliding block 423 in the radial direction of the disk generator 100 is limited, a possibility of friction interference caused by contact between each segment of sub-spring 4211 and the inner peripheral wall of the groove 22 is reduced, and reliability of torque transfer of the torsional vibration damper 40 is further ensured.

In an embodiment, each circumferential spring 421 includes a plurality of segments of sub-springs 4211, to further ensure reliability of torque transfer of the torsional vibration damper 40. In this embodiment, two circumferential buffer members 42 are disposed, and lengths of the circumferential buffer members 42 in the circumferential direction of the disk generator 100 are equal. A circumferential spring 421 of each circumferential buffer member 42 includes three segments of sub-springs 4211, and correspondingly, there are two middle sliding blocks 423. It may be understood that, in some other embodiments, a quantity of circumferential buffer members 42, a length of the circumferential buffer member 42 in the circumferential direction of the disk generator 100, a quantity of sub-springs 4211 in each circumferential buffer member 42, a length of each sub-spring 4211 in the circumferential direction of the disk generator 100, and a quantity of corresponding middle sliding blocks 423 may alternatively be set in a matching manner based on different use requirements of the disk generator 100 in this application. This is not particularly limited in this application.

In an embodiment, as shown in FIG. 7 to FIG. 11, in the axial direction of the disk generator 100, the second radial stopper 411 is closer to the bottom of the groove 22 than the first radial stopper 221. This facilitates processing of the first radial stopper 221. In the axial direction of the disk generator 100, the sliding block 422 is attached to the bottom of the groove 22, and a thickness of the sliding block 422 is greater than a distance between the second radial stopper 411 and the bottom of the groove 22. In this way, each sliding block 422 is at least partially attached to the second radial stopper 411 in the axial direction of the disk generator 100.

Each first radial stopper 221 is aligned with one second radial stopper 411, and two opposite ends of each circumferential buffer member 42 are respectively fastened to the first radial stopper 221 and the second radial stopper 411. It may be understood that, in the circumferential direction of the disk generator 100, each sliding block 422 is attached to one first radial stopper 221 and one second radial stopper 411, to reduce deviation of the extension line of the circumferential spring 421 in the axial direction of the disk generator 100, and prevent torque transfer from being affected by an excessively large deviation of the circumferential spring 421 in the axial direction of the disk generator 100. Therefore, reliability of torque transfer of the torsional vibration damper 40 is ensured.

In an embodiment, in the axial direction of the disk generator 100, a thickness of each sliding block 422 is less than or equal to the depth of the groove 22, and is greater than or equal to a sum of a thickness of the first radial stopper 221, a thickness of the second radial stopper 411, and a spacing between the first radial stopper 221 and the second radial stopper 411.

Each sliding block 422 is attached to the bottom of the groove 22. It may be understood that, disposing of the sliding block 422 with a thickness less than or equal to the depth of the groove 22 can ensure that the groove 22 completely accommodates the sliding block 422, to reduce a spacing between the second end face 11 of the flywheel 10 and the first end face 21 of the rotor 20 in the axial direction of the disk generator 100. The thickness of each sliding block 422 is set to be greater than or equal to the sum of the thickness of the first radial stopper 221, the thickness of the second radial stopper 411, and the spacing between the first radial stopper 221 and the second radial stopper 411, so that it can be ensured that each sliding block 422 is completely attached to the first radial stopper 221 and the second radial stopper 411, to further reduce deviation of the extension line of the circumferential spring 421 in the axial direction of the disk generator 100, and further avoid impact on torque transfer caused by an excessively large deviation of the circumferential spring 421 in the axial direction of the disk generator 100. Therefore, reliability of torque transfer of the torsional vibration damper 40 is further ensured.

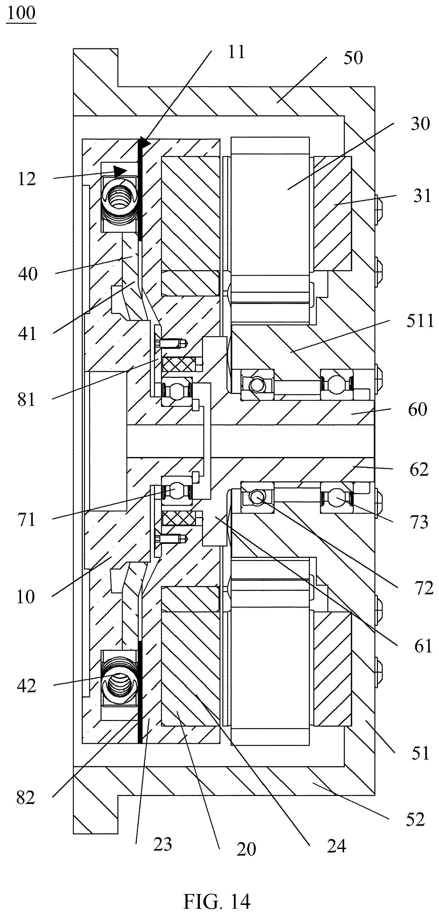

In another embodiment, the second end face 11 that is of the flywheel 10 and that faces the rotor 20 includes a groove (shown as a groove 12 in FIG. 14), and a structure of the groove 12 is similar to that of the groove 22. The groove 12 is configured to accommodate the torsional vibration damper 40. For details, refer to a diagram that is of a cross-sectional structure of the disk generator 100 according to an embodiment of this application and that is shown in FIG. 14. In this embodiment, an end face that is of the drive disk 41 and that faces the rotor 20 is configured to fasten the first end face 21 of the rotor 20, and the circumferential buffer member 42 is configured to elastically connect the outer peripheral wall of the drive disk 41 to the inner peripheral wall of the groove 12 in the circumferential direction of the disk generator 100. When the engine works, the flywheel 10 rotates relative to the housing 50 under driving of the crankshaft, and transfers torque to the rotor 20 through the torsional vibration damper 40, to drive the rotor 20 to rotate relative to the stator 30. In this way, the power generation function is implemented.

Therefore, based on limitations in the foregoing embodiments, in the disk generator 100 in this application, the flywheel 10 is elastically connected to the rotor 20 in the circumferential direction of the disk generator 100 through the torsional vibration damper 40, so that torque of the flywheel 10 driven by the engine through the crankshaft can be transferred to the torsional vibration damper 40, and the torsional vibration damper 40 absorbs fluctuation in the torque and then transfers the torque to the rotor 20, and enables the rotor 20 to rotate relative to the stator 30. In this way, the power generation function of the disk generator 100 in this application is implemented.

In the disk generator 100 in this application, the torsional vibration damper 40 is further embedded in the groove 12 of the flywheel 10 or the groove 22 of the rotor 20, thereby reducing a spacing between the first end face 21 and the second end face 11 in the axial direction of the disk generator 100, and reducing a spacing between the flywheel 10 and the rotor 20 in the axial direction of the disk generator 100. In addition, the circumferential buffer members 42 of the torsional vibration damper 40 are arranged in the circumferential direction of the disk generator 100, to control sizes of the flywheel 10 and the rotor 20 in the radial direction of the disk generator 100. In this way, the flywheel 10 and the rotor 20 can cooperate to form a compact integrated arrangement structure, so that an overall volume of the disk generator 100 in this application is reduced on the premise of ensuring transmission efficiency of the disk generator 100 in this application, and a structure of the disk generator 100 in this application is compact.

In the disk generator 100 in this application, the flywheel 10 and the rotor 20 are integrated, so that the disk generator 100 in this application has a compact structure and a small overall volume. When the disk generator 100 in this application is used in a hybrid powertrain, the disk generator 100 in this application can convert kinetic energy of an engine into electric energy, and reduce a volume of the disk generator 100, thereby miniaturizing the hybrid powertrain.

It may be understood that internal space occupied by the hybrid powertrain in this application in a vehicle is reduced, so that arrangement of internal components of the vehicle and control on an overall volume of the vehicle are facilitated. Therefore, the vehicle in this application has characteristics of a compact structure and a small overall volume.

In addition, for the disk generator 100 in this application, the flywheel 10 is equivalent to primary mass, the rotor 20 and the motor shaft 60 are equivalent to secondary mass, and the primary mass and the secondary mass cooperate with the torsional vibration damper 40, to form a dual mass flywheel-torsion vibration damping system of the disk generator 100 in this application. When the dual mass flywheel-torsion vibration damping system is applied to the vehicle in this application, a bending load of the crankshaft of the engine connected to the disk generator 100 in this application can be further reduced, and a service life of a crankshaft bearing and a service life of the engine can be prolonged.

It may be understood that, in another embodiment, the disk generator in this application may be further used in another use scenario, for example, used in a rail vehicle or an aircraft. This is not particularly limited in this application.

In an embodiment, refer back to FIG. 1 to FIG. 3. The end cover 51 of the housing 50 is arranged on a side that is of the stator 30 and that is away from the rotor 20 in the axial direction of the disk generator 100, the end cover 51 is configured to fasten to the stator 30, and the sleeve 52 of the housing 50 is sleeved on peripheries of the stator 30, the rotor 20, and the flywheel 10. The sleeve 52 is configured to cooperate with the end cover 51 to form an accommodating cavity (not shown in the figure) to accommodate the stator 30, the rotor 20, and the flywheel 10, so that the flywheel 10 is integrated into the disk generator 100 in this application, and a structure of the disk generator 100 in this application is more compact.

An axial length of the sleeve 52 of the housing 50 is greater than a spacing between the flywheel 10 and the end cover 51 of the housing 50. The sleeve 52 extends from the end cover 51 toward the flywheel 10, and an extension length of the sleeve 52 exceeds the first end face 21 of the rotor 20 and the second end face 11 of the flywheel 10. Therefore, the sleeve 52 may be configured to shield an axial gap between the rotor 20 and the flywheel 10, to prevent external impurities from entering the torsional vibration damper 40 through the axial gap between the rotor 20 and the flywheel 10, and avoid impact of the external impurities on torque transfer effect and vibration damping effect of the torsional vibration damper 40.

In an embodiment, as shown in FIG. 1 to FIG. 3, the motor shaft 60 is configured to rotatably connect the rotor 20 and the housing 50. In the axial direction of the disk generator 100 in this application, one end of the motor shaft 60 is configured to pass through the stator 30 and is rotatably connected to the housing 50, the other end includes a bearing accommodating hole, and the bearing accommodating hole is configured to accommodate a first bearing 71. A middle section of the motor shaft 60 is configured to fasten the rotor 20. Specifically, the motor shaft 60 includes a first section 61 and a second section 62 that are connected to each other, the first section 61 is configured to pass through the stator 30 and is rotatably connected to the housing 50, and an outer circumferential surface of the second section 62 is configured to fasten the rotor 20, to implement rotatable connection between the rotor 20 and the housing 50.

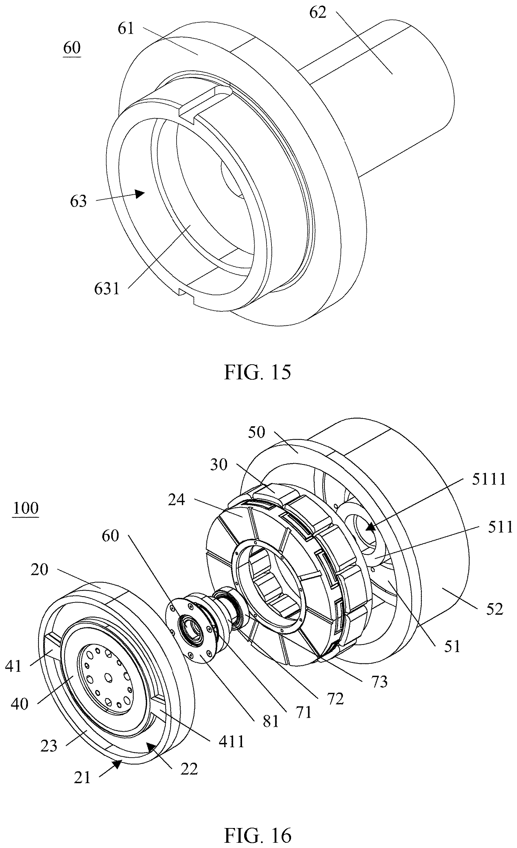

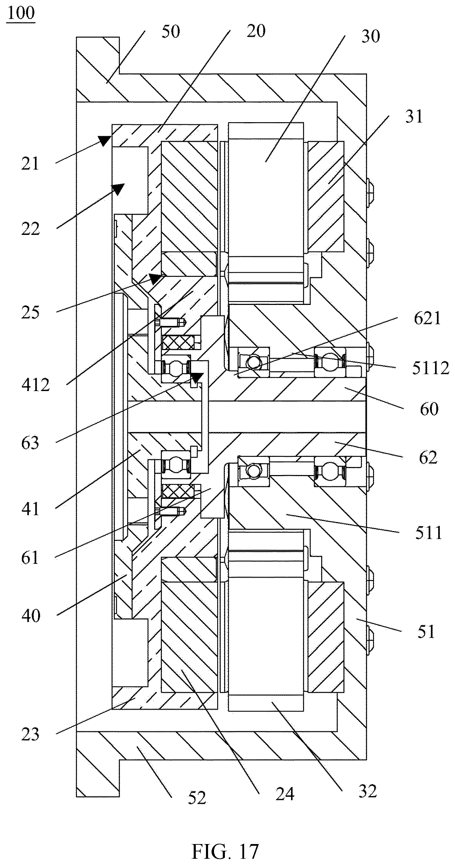

The bearing accommodating hole 63 is disposed on an end face that is of the second section 62 and that is away from the first section 61, the first bearing 71 is accommodated in the bearing accommodating hole 63, and an inner circumferential surface of the bearing accommodating hole 63 is configured to fasten an outer circumferential surface of an outer ring of the first bearing 71. The first bearing 71 is configured to be in coaxial transmission with the drive disk 41. Specifically, refer to a diagram that is of an outline structure of the motor shaft 60 in the disk generator 100 according to an embodiment of this application and that is shown in FIG. 15, a diagram that is of a partial exploded structure of the disk generator 100 according to an embodiment of this application and that is shown in FIG. 16, and a diagram that is of a partial cross-sectional structure of the disk generator 100 according to an embodiment of this application and that is shown in FIG. 17.

As shown in FIG. 15 to FIG. 17, the outer circumferential surface of the outer ring of the first bearing 71 is attached to a hole wall (an inner circumferential surface) of the bearing accommodating hole 63, and an end part that is of the drive disk 41 fastened to the flywheel 10 and that faces the rotor 20 extends into an inner ring of the first bearing 71 and is fastened to the inner ring of the first bearing 71. An axis of the motor shaft 60 coincides with the axis of the disk generator 100, and an axis of the bearing accommodating hole 63 also coincides with the axis of the disk generator 100.

When the engine works, the flywheel 10 rotates around the axis of the disk generator 100 under driving of the crankshaft, and the drive disk 41 rotates under action of torque of the flywheel 10, and drives the inner ring of the first bearing 71 to rotate, to enable the drive disk 41 to rotate relative to the housing 50 around the axis of the disk generator 100. The flywheel 10 is in coaxial transmission with the first bearing 71 on the motor shaft 60 through the drive disk 41. It may be understood that disposing of the first bearing 71 ensures coaxial transmission between the drive disk 41 and the rotor 20.

In another embodiment, refer back to FIG. 14. When the groove 12 is disposed on the second end face 11 that is of the flywheel 10 and that faces the rotor 20, an end part that is of the flywheel 10 and that faces the rotor 20 further extends into the inner ring of the first bearing 71 and is fastened to the inner ring of the first bearing 71, so that the flywheel 10 can be directly in coaxial transmission with the first bearing 71 of the motor shaft 60. In this case, the drive disk 41 is fastened relative to the rotor 20, and the first bearing 71 is configured to be in coaxial transmission with the flywheel 10. It may be understood that disposing of the first bearing 71 ensures coaxial transmission between the flywheel 10 and the rotor 20.

In an embodiment, as shown in FIG. 15 to FIG. 17, a first radial protrusion 631 is disposed on the hole wall of the bearing accommodating hole 63. In the axial direction of the disk generator 100, the first bearing 71 is located on a side that is of the first radial protrusion 631 and that is close to an opening of the bearing accommodating hole 63. In the radial direction of the disk generator 100, a spacing between the first radial protrusion 631 and the axis of the disk generator 100 is less than or equal to a spacing between the outer ring of the first bearing 71 and the axis of the disk generator 100. The first radial protrusion 631 is configured to limit displacement of the first bearing 71 in the axial direction of the disk generator 100.

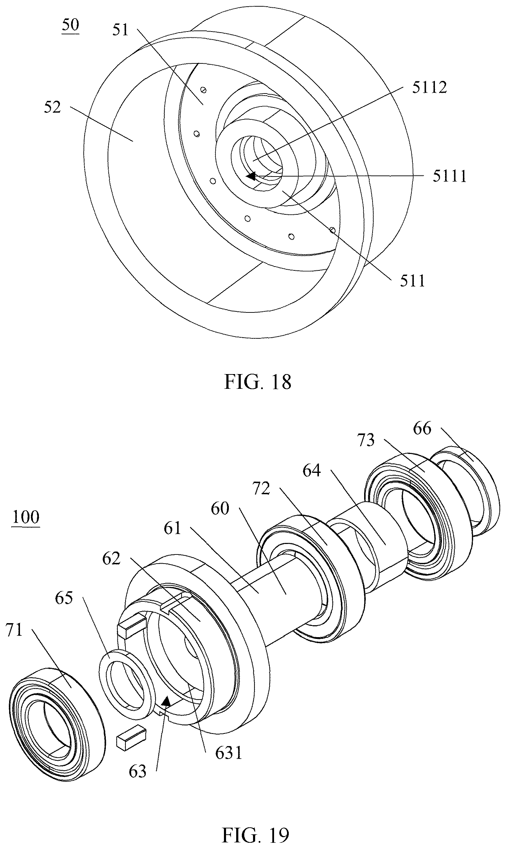

Refer to a diagram that is of an outline structure of the housing 50 in the disk generator 100 according to an embodiment of this application and that is shown in FIG. 18, and refer to FIG. 15 to FIG. 17 together.

As shown in FIG. 15 to FIG. 18, the end cover 51 includes an axial connection column 511, the axial connection column 511 is disposed on an end face that is of the end cover 51 and that faces the stator 30, and the axial connection column 511 extends into an inner hole of the stator 30 in the axial direction of the disk generator 100 and is in coaxial transmission with the motor shaft 60. Specifically, the axial connection column 511 is fastened to the first section 61 of the motor shaft 60 through a bearing. In the axial direction of the disk generator 100, the axial connection column 511 is spaced from the rotor 20. When the engine works, the flywheel 10 drives the drive disk 41 to rotate through the crankshaft, the rotating drive disk 41 transfers torque to the rotor 20 through the circumferential buffer member 42, to enable the rotor 20 to rotate relative to the housing 50 (the axial connection column 511), and the rotating rotor 20 drives the motor shaft 60 to rotate relative to the housing 50. This implements coaxial transmission between the motor shaft 60 and the housing 50.

In an embodiment, as shown in FIG. 15 to FIG. 18, the motor shaft 60 extends into an inner hole of the axial connection column 511, and is rotatably connected to the axial connection column 511 through a bearing. The axial connection column 511 is provided with a first through hole 5111 that penetrates the axial connection column 511 in the axial direction of the disk generator 100, and an axis of the first through hole 5111 coincides with the axis of the disk generator 100.

The disk generator 100 in this application further includes a second bearing 72, the second bearing 72 is accommodated in the first through hole 5111, and an outer circumferential surface of an outer ring of the second bearing 72 is fastened to a hole wall (an inner circumferential surface) of the first through hole 5111. The first section 61 of the motor shaft 60 extends into the first through hole 5111, and extends into an inner ring of the second bearing 72 to fasten to the inner ring of the second bearing 72. In this way, the motor shaft 60 is rotatably connected to the axial connection column 511 through the second bearing 72.

It may be understood that disposing of the second bearing 72 implements coaxial disposing of the housing 50 and the motor shaft 60, so that the flywheel 10, the rotor 20, and the stator 30 are coaxially arranged. In this way, a space volume of the disk generator 100 in this application in the axial direction is reduced, and an overall volume of the disk generator 100 in this application is further reduced, so that a structure of the disk generator 100 in this application is more compact.

In addition, disposing of the second bearing 72 limits radial shaking of components in the disk generator 100, thereby reducing noise and vibration generated in a running process of the disk generator 100 in this application, and improving running efficiency and running stability of the disk generator 100 in this application.

In an embodiment, as shown in FIG. 15 to FIG. 18, the motor shaft 60 is rotatably connected to the axial connection column 511 through at least two bearings, and the at least two bearings are arranged at intervals in the axial direction of the disk generator 100. Specifically, the disk generator 100 in this application further includes at least one second bearing 72 and at least one third bearing 73, the third bearing 73 is accommodated in the first through hole 5111, and the second bearing 72 is closer to the rotor 20 than the third bearing 73 in the axial direction of the disk generator 100.

An outer ring of the third bearing 73 is fastened to a hole wall of the first through hole 5111. The first section 61 of the motor shaft 60 extends into the first through hole 5111, and sequentially passes through the second bearing 72 and the third bearing 73. The first section 61 is separately fastened to an inner ring of the second bearing 72 and an inner ring of the third bearing 73. In this way, the motor shaft 60 is rotatably connected to the axial connection column 511 through the second bearing 72 and the third bearing 73.

It may be understood that disposing of the second bearing 72 and the third bearing 73 increases a contact area between the motor shaft 60 and the axial connection column 511 on the premise of ensuring rotatable connection between the motor shaft 60 and the axial connection column 511, so that a load transmitted to the motor shaft 60 through the axial connection column 511 can be transmitted to the motor shaft 60 through the second bearing 72 and the third bearing 73. Therefore, a load of a single bearing is reduced, and a service life of the second bearing 72 and a service life of the third bearing 73 are prolonged.

In addition, disposing the second bearing 72 and the third bearing 73 in a matching manner further ensures coaxial disposing of the housing 50 and the motor shaft 60, and prevents the motor shaft 60 from forming a structure similar to a cantilever support. This further reduces noise and vibration generated in a running process of the disk generator 100 in this application, and improves running efficiency and running stability of the disk generator 100 in this application.

In this embodiment, there is one second bearing 72, and there is also one third bearing 73. It may be understood that, in some other embodiments, a quantity of second bearings 72, a quantity of third bearings 73, a type of the second bearings 72, a type of the third bearings 73, an arrangement manner of the second bearings 72, and an arrangement manner of the third bearings 73 may be alternatively set in a matching manner based on different bearing requirements and transmission requirements of the disk generator 100. This is not particularly limited in this application.

In an embodiment, as shown in FIG. 17 and FIG. 18, a radial protrusion 5112 is disposed on an inner wall of the first through hole 5111 of the axial connection column 511, and the radial protrusion 5112 extends in the radial direction of the disk generator 100 and is spaced from the second section 62 of the motor shaft 60. In the axial direction of the disk generator 100, the second bearing 72 and the third bearing 73 are respectively arranged on two opposite sides of the radial protrusion 5112, and an outer ring of the second bearing 72 and an outer ring of the third bearing 73 are respectively fastened on the two opposite sides of the radial protrusion 5112, to limit a spacing between the second bearing 72 and the third bearing 73 in the axial direction of the disk generator 100.

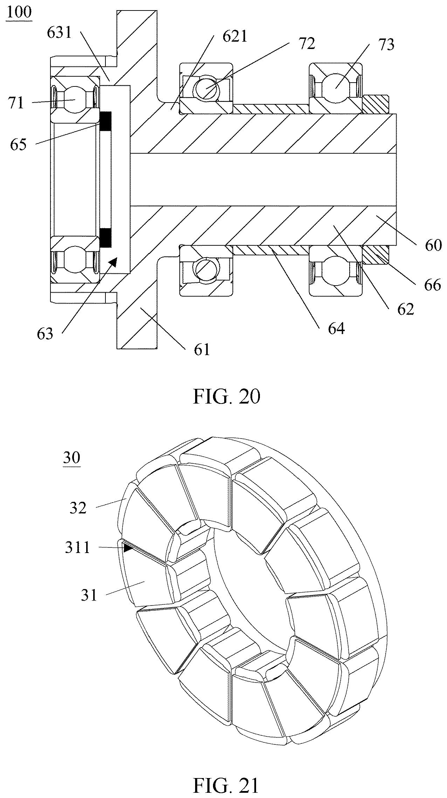

In an embodiment, the motor shaft 60 further includes a limiting ring 64. Specifically, refer to a diagram that is of an exploded structure of the motor shaft 60 and bearings in the disk generator 100 according to an embodiment of this application and that is shown in FIG. 19 and a diagram that is of a partial cross-sectional structure of the motor shaft 60 and bearings in the disk generator 100 according to an embodiment of this application and that is shown in FIG. 20.

The limiting ring 64 is sleeved on an outer edge of the second section 62, and is fastened to the second section 62. In the radial direction of the disk generator 100, an outer wall of the limiting ring 64 is spaced from the inner wall of the first through hole 5111. In the axial direction of the disk generator 100, the second bearing 72 and the third bearing 73 are respectively arranged on two opposite sides of the limiting ring 64, and the inner ring of the second bearing 72 and the inner ring of the third bearing 73 are respectively fastened to the two opposite ends of the limiting ring 64, to limit the spacing between the second bearing 72 and the third bearing 73 in the axial direction of the disk generator 100.

In the radial direction of the disk generator 100, the radial protrusion 5112 and the limiting ring 64 are aligned with each other, and a spacing between the radial protrusion 5112 and the axis of the disk generator 100 is greater than or equal to an inner diameter of an outer ring of the second bearing 72 and an inner diameter of an outer ring of the third bearing 73. An outer diameter of the limiting ring 64 is less than or equal to an outer diameter of the inner ring of the second bearing 72 and an outer diameter of the inner ring of the third bearing 73. The second radial protrusion 5112 and the limiting ring 64 are configured to cooperate with each other to limit the spacing between the second bearing 72 and the third bearing 73 in the axial direction of the disk generator 100.

A magnetic structure is disposed in the rotor 20, and a magnetically conductive structure is disposed in the stator 30. Therefore, a magnetic field in the rotor 20 can enable the rotor 20 and the stator 30 to generate mutual attraction electromagnetic force in the axial direction of the disk generator 100. In addition, in the axial direction of the disk generator 100, a magnetic gap is reserved between the rotor 20 and the stator 30.

The magnetic gap between the rotor 20 and the stator 30 can enable the magnetic field generated by the rotor 20 to be partially concentrated at a junction between the magnetic field generated by the rotor 20 and the stator 30, increase a quantity of magnetic induction lines that pass through the magnetic gap and enter the stator 30, and improve electromagnetic induction effect in the stator 30, thereby improving the power generation capability of the disk generator 100 in this application. In addition, existence of the magnetic gap can further reduce impact of relative motion between the rotor 20 and the stator 30, avoid contact friction between the rotor 20 and the stator 30 when the rotor 20 rotates relative to the stator 30, and ensure a rotational speed of the rotor 20 relative to the stator 30, thereby ensuring the power generation capability of the disk generator 100 in this application.

The rotor 20 is fastened to the motor shaft 60, and the stator 30 is fastened to the housing 50. Therefore, when electromagnetic force generated between the stator 30 and the rotor 20 causes the stator 30 and the rotor 20 to flutter in the axial direction of the disk generator 100, the electromagnetic force also drives the motor shaft 60 and the housing 50 to generate relative displacement in the axial direction of the disk generator 100. As a result, the second bearing 72 and the third bearing 73 are close to each other in the axial direction of the disk generator 100. It may be understood that disposing of the second radial protrusion 5112 and the limiting ring 64 limits the spacing between the second bearing 72 and the third bearing 73 in the axial direction of the disk generator 100. Therefore, a spacing between the motor shaft 60 and the housing 50 in the axial direction of the disk generator 100 is limited. In this way, the magnetic gap between the rotor 20 and the stator 30 in the axial direction of the disk generator 100 is ensured.

In an embodiment, as shown in FIG. 17 to FIG. 20, the motor shaft 60 further includes a first limiting shaft sleeve 65, and the first limiting shaft sleeve 65 is accommodated in the bearing accommodating hole 63. The first limiting shaft sleeve 65 is ring-shaped, and the first limiting shaft sleeve 65 is sleeved on an outer edge of the axial connection column 511 and is fastened to the axial connection column 511. In the axial direction of the disk generator 100, the first limiting shaft sleeve 65 is fastened on a side that is of the first bearing 71 and that faces the second bearing 72. In the radial direction of the disk generator 100, an outer diameter of the first limiting shaft sleeve 65 is less than or equal to an outer diameter of the inner ring of the first bearing 71. The first limiting shaft sleeve 65 is configured to limit displacement of the first bearing 71 in the axial direction of the disk generator 100 on the premise of ensuring a transmission function of the first bearing 71.

In an embodiment, as shown in FIG. 19 and FIG. 20, a radial bump 621 is disposed on the second section 62 of the motor shaft 60, and the radial bump 621 protrudes in the radial direction of the disk generator 100. In the axial direction of the disk generator 100, the radial bump 621 is located on a side that is of the second bearing 72 and that is away from the third bearing 73. In the radial direction of the disk generator 100, an outer diameter of the radial bump 621 is less than or equal to the outer diameter of the inner ring of the second bearing 72. The radial bump 621 is configured to cooperate with the limiting ring 64, to further limit displacement of the second bearing 72 in the axial direction of the disk generator 100 on the premise of ensuring the transmission function of the second bearing 72.

In an embodiment, as shown in FIG. 19 and FIG. 20, the motor shaft 60 further includes a second limiting shaft sleeve 66, and the second limiting shaft sleeve 66 is sleeved on the outer edge of the second section 62 and is fastened to the second section 62. In the axial direction of the disk generator 100, the second limiting shaft sleeve 66 is fastened on a side that is of the third bearing 73 and that is away from the second bearing 72. In the radial direction of the disk generator 100, an outer diameter of the second limiting shaft sleeve 66 is less than or equal to the outer diameter of the inner ring of the third bearing 73. The second limiting shaft sleeve 66 is configured to cooperate with the limiting ring 64, to further limit displacement of the third bearing 73 in the axial direction of the disk generator 100 on the premise of ensuring the transmission function of the third bearing 73.

Refer to a diagram that is of an outline structure of the stator 30 in the disk generator 100 according to an embodiment of this application and that is shown in FIG. 21. In addition, refer to FIG. 1 to FIG. 3 together.

As shown in FIG. 1, FIG. 2, FIG. 3, and FIG. 21, the stator 30 includes a stator core 31 and a plurality of electromagnetic coils 32, the stator core 31 is configured to fasten the end cover 51 of the housing 50, the stator core 31 includes a plurality of coil grooves 311, each coil groove 311 is configured to accommodate and fasten one electromagnetic coil 32, and the plurality of coil grooves 311 are arranged at intervals in a circumferential direction of the stator core 31.

When the engine works, the flywheel 10 drives, through the crankshaft, the drive disk 41 to rotate relative to the housing 50, and the drive disk 41 transfers torque to the rotor 20 through the circumferential buffer member 42, so that the rotor 20 rotates relative to the stator 30. A magnetic rotor magnet assembly (not shown in the figure) in the rotor 20 rotates with the rotor 20. The stator core 31 centralizes magnetic induction lines of the rotor 20 and guides the magnetic induction lines to the electromagnetic coils 32. The rotating rotor 20 enables the electromagnetic coils 32 to move in a direction of cutting the magnetic induction lines, to generate induced electromotive force in the electromagnetic coils 32, thereby implementing the power generation function of the disk generator 100 in this application.

It may be understood that the plurality of electromagnetic coils 32 are disposed in a matching manner with the plurality of coil grooves 311.

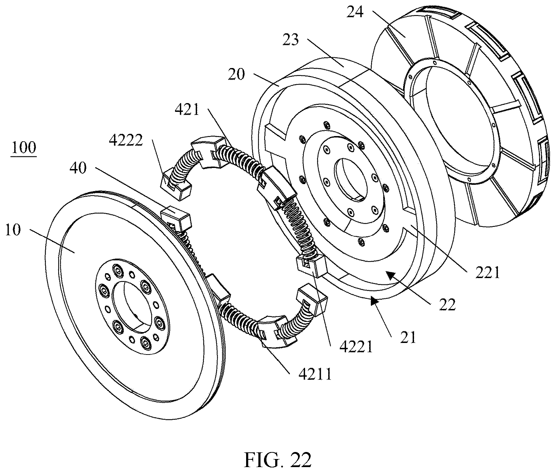

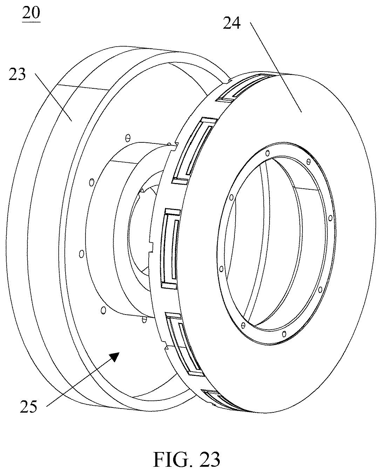

Refer to a diagram that is of a partial exploded structure of the disk generator 100 according to an embodiment of this application and that is shown in FIG. 22 and a diagram that is of an exploded structure of the rotor 20 in the disk generator 100 according to an embodiment of this application and that is shown in FIG. 23. In addition, refer to FIG. 2 and FIG. 3 together.

As shown in FIG. 2, FIG. 3, FIG. 22, and FIG. 23, the rotor 20 includes a rotor backplane 23 and a rotor magnet assembly 24, a magnet assembly accommodating groove 25 is disposed on an end face that is of the rotor backplane 23 and that faces the stator 30 in the axial direction of the disk generator 100, and the rotor magnet assembly 24 is fastened in the magnet assembly accommodating groove 25. In the axial direction of the disk generator 100, the groove 22 is disposed on the first end face 21 that is of the rotor backplane 23 and that faces the flywheel 10.

The rotor backplane 23 is further provided with a second through hole 26 that penetrates the rotor backplane 23 in the axial direction of the disk generator 100, and the second through hole 26 connects the groove 22 and the magnet assembly accommodating groove 25. The first section 61 of the motor shaft 60 extends into the second through hole 26, and the first section 61 is fastened to the rotor backplane 23 in a key connection manner.

In an embodiment, the rotor backplane 23 is produced by using a non-magnetic material, to prevent magnetic induction lines generated by the rotor magnet assembly 24 from escaping outward through the rotor backplane 23, and avoid impact of the rotor backplane 23 on a magnetic circuit.

In an embodiment, as shown in FIG. 1 to FIG. 3, an end face (the first end face 21) that is of the rotor 20 and that faces the flywheel 10 includes the groove 22. An axial connection portion 412 is disposed on an end face that is of the drive disk 41 and that is away from the flywheel 10. The axial connection portion 412 extends into the inner ring of the first bearing 71 in the axial direction of the disk generator 100, and is fastened to the inner ring of the first bearing 71. The first bearing 71 is configured to implement coaxial transmission between the drive disk 41 and the rotor 20.

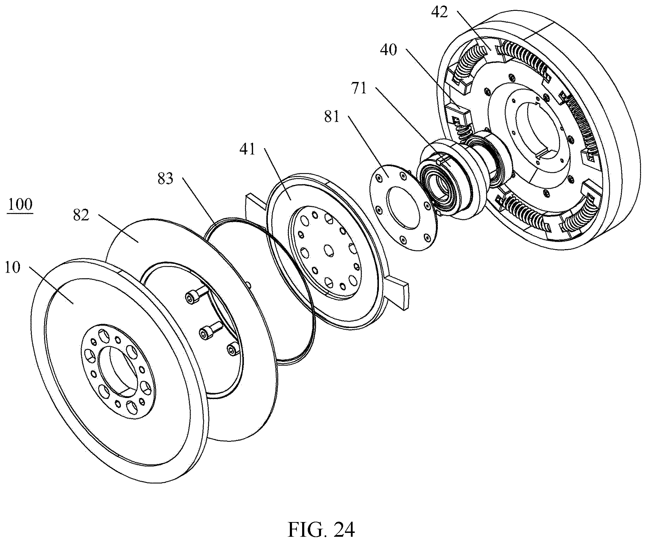

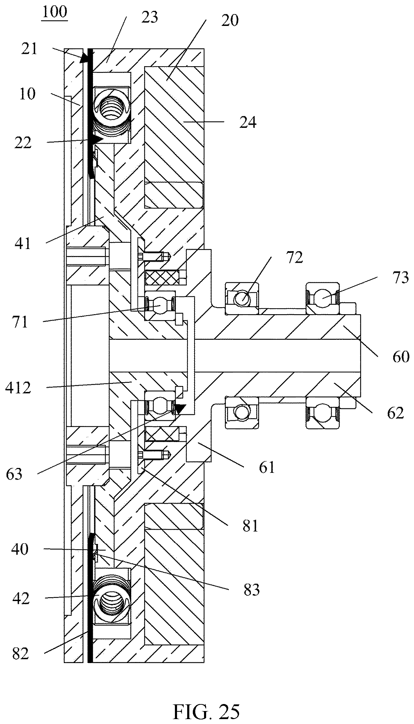

Refer to a diagram that is of a partial exploded structure of the disk generator 100 according to an embodiment of this application and that is shown in FIG. 24 and a diagram that is of a partial cross-sectional structure of the disk generator 100 according to an embodiment of this application and that is shown in FIG. 25. In addition, refer to FIG. 2 and FIG. 3 together.

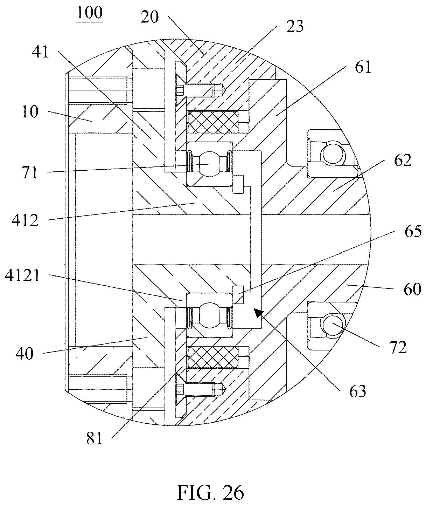

As shown in FIG. 2, FIG. 3, FIG. 24, and FIG. 25, the disk generator 100 in this application further includes a sealing ring 81, and the sealing ring 81 is fastened to the bottom of the groove 22. Specifically, refer to a diagram that is of a partial cross-sectional structure of the disk generator 100 according to an embodiment of this application and that is shown in FIG. 26. FIG. 26 is a diagram of the partial cross-sectional structure of FIG. 25.

An inner diameter of the sealing ring 81 is greater than or equal to an outer diameter of the axial connection portion 412, and the sealing ring 81 is configured to shield a gap between the axial connection portion 412 and the rotor 20 in the radial direction of the disk generator 100.

In an embodiment, a lubricant may be coated inside the groove 22 (or the groove 12), and the lubricant is used to lubricate the circumferential buffer member 42, the drive disk 41, and the like, to reduce friction force generated when the torsional vibration damper 40 moves in the groove 22, and improve transmission efficiency. In this embodiment, the sealing ring 81 is configured to prevent the lubricant disposed in the groove 22 from overflowing outward through the gap. This ensures content of the lubricant acting on the circumferential buffer member 42 of the torsional vibration damper 40, protects the torsional vibration damper 40, and further prevents the lubricant from affecting cooperative power generation between the rotor 20 and the stator 30.

In an embodiment, as shown in FIG. 2, FIG. 3, FIG. 24, FIG. 25, and FIG. 26, the axial connection portion 412 includes a radial boss 4121, the radial boss 4121 is located on a side that is of the first bearing 71 and that is away from the stator 30 in the axial direction of the disk generator 100. In the radial direction of the disk generator 100, an outer diameter of the radial boss 4121 is less than or equal to the outer diameter of the inner ring of the first bearing 71. The radial boss 4121 is configured to shield a gap between the inner ring of the first bearing 71 and the axial connection portion 412 in the radial direction of the disk generator 100, to further block leakage of the lubricant, ensure content of the lubricant acting on the circumferential buffer member 42 of the torsional vibration damper 40, protect the torsional vibration damper 40, and improve transmission efficiency.

In an embodiment, an inner diameter of the sealing ring 81 is greater than or equal to an inner diameter of the outer ring of the first bearing 71. The sealing ring 81 is configured to shield a gap between the outer ring of the first bearing 71 and the rotor 20 in the radial direction of the disk generator 100, to further block leakage of the lubricant, ensure content of the lubricant acting on the circumferential buffer member 42 of the torsional vibration damper 40, and protect the torsional vibration damper 40.

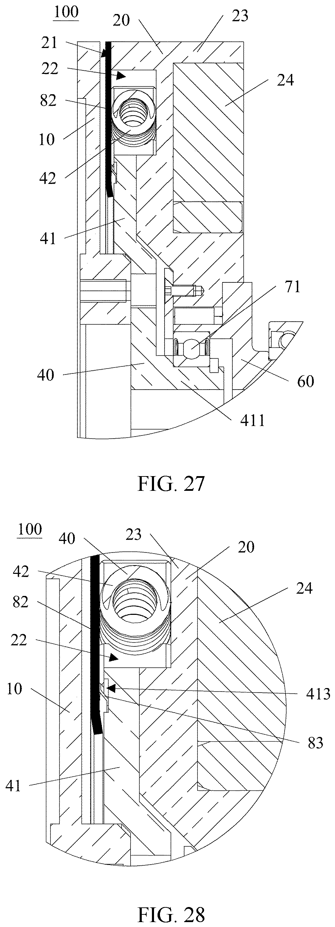

In an embodiment, as shown in FIG. 2, FIG. 3, FIG. 24, and FIG. 25, the disk generator 100 in this application further includes a groove cover 82, and the groove cover 82 is located between the flywheel 10 and the rotor 20 in the axial direction of the disk generator 100. Specifically, refer to a diagram that is of a partial cross-sectional structure of the disk generator 100 according to an embodiment of this application and that is shown in FIG. 27. FIG. 27 is a diagram of the partial cross-sectional structure of FIG. 25.

The groove cover 82 is ring-shaped. In the radial direction of the disk generator 100, an outer diameter of the groove cover 82 is greater than a diameter of the inner peripheral wall of the groove 22, and an inner diameter of the groove cover 82 is less than a diameter of the outer peripheral wall of the drive disk 41. The groove cover 82 is fastened to a groove opening of the groove 22, and the groove cover 82 is configured to shield a radial gap between the inner peripheral wall of the groove 22 and the outer peripheral wall of the drive disk 41.

It may be understood that the groove cover 82 is fastened at the groove opening of the groove 22, to shield the radial gap between the outer peripheral wall of the drive disk 41 and the inner peripheral wall of the groove 22, so that the groove cover 82 can cooperate with the drive disk 41 to seal accommodation space for accommodating the circumferential buffer member 42, leakage of the lubricant used to lubricate the circumferential buffer member 42 is prevented, content of the lubricant acting on the circumferential buffer member 42 is ensured, and the torsional vibration damper 40 is protected.

In this embodiment, the groove cover 82 is fastened to the rotor 20. In some other embodiments, when the groove 12 is disposed on the second end face 11 of the flywheel 10, the groove cover 82 is fastened to the flywheel 10. Further, when the groove 12 is located on the second end face 11, the groove cover 82 is configured to: shield the groove 12 on the flywheel 10, and prevent the lubricant from overflowing into the rotor 20, so that cooperative power generation between the rotor 20 and the stator 30 is not affected.

In an embodiment, as shown in FIG. 2, FIG. 3, FIG. 24, and FIG. 25, the disk generator 100 in this application further includes an elastic baffle ring 83. The elastic baffle ring 83 is located between the groove cover 82 and the drive disk 41 in the axial direction of the disk generator 100. Specifically, refer to a diagram that is of a partial cross-sectional structure of the disk generator 100 according to an embodiment of this application and that is shown in FIG. 28. FIG. 28 is a diagram of the partial cross-sectional structure of FIG. 25.

In the radial direction of the disk generator 100, an outer diameter of the elastic baffle ring 83 is greater than an inner diameter of the groove cover 82, and the inner diameter of the elastic baffle ring 83 is less than the diameter of the outer peripheral wall of the drive disk 41. The elastic baffle ring 83 elastically abuts between the groove cover 82 and the drive disk 41 in the axial direction of the disk generator 100, and the elastic baffle ring 83 is configured to shield an axial gap between the groove cover 82 and the drive disk 41, to prevent the lubricant from leaking from the gap between the groove cover 82 and the drive disk 41, and further seal the groove 22. Because the groove cover 82 may rotate relative to the drive disk 41, the axial gap needs to be reserved between the groove cover 82 and the drive disk 41, to avoid interference between the groove cover 82 and the drive disk 41 in a relative rotation process. The axial gap may cause overflow of the lubricant. Therefore, in this application, the elastic baffle ring 83 is disposed to prevent overflow of the lubricant, ensure content of the lubricant oil acting on the circumferential buffer member 42, and protect the torsional vibration damper 40.

In an embodiment, refer back to FIG. 10 and FIG. 28. An annular stop 413 is disposed on an end face that is of the drive disk 41 and that faces the groove cover 82, and the annular stop 413 is configured to fasten an end face that is of the elastic baffle ring 83 and that faces the drive disk 41 in the axial direction of the disk generator 100. It may be understood that, disposing of the annular stop 413 limits a position of the elastic baffle ring 83 in the radial direction of the disk generator 100, to prevent the elastic baffle ring 83 from detaching in a running process of the disk generator 100 in this application and affecting sealing performance on the groove 22. This further ensures content of the lubricant acting on the circumferential buffer member 42, and protects the torsional vibration damper 40.

In an embodiment, the elastic baffle ring 83 is elastic in the axial direction of the disk generator 100. In the axial direction of the disk generator 100, two sides of the elastic baffle ring 83 are respectively configured to abut the drive disk 41 and the groove cover 82 to implement sealing. It may be understood that elasticity of the elastic baffle ring 83 in the axial direction of the disk generator 100 can still be used to seal the groove 22 when relative displacement is generated between the drive disk 41 and the groove cover 82 in the axial direction of the disk generator 100. In addition, the elastic baffle ring 83 can further absorb axial force transmitted to the groove cover 82 through the drive disk 41, to reduce noise and vibration in a running process of the disk generator 100 in this application.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A disk generator integrated with a flywheel, wherein the disk generator comprises the flywheel, a stator, and a rotor, the flywheel, the rotor, and the stator are sequentially arranged adjacent to each other in an axial direction of the generator, the flywheel is configured to: be in transmission connection to an engine, and drive the rotor to rotate through a torsional vibration damper, and the torsional vibration damper comprises a drive disk and a plurality of circumferential buffer members;
one of an end face that is of the rotor and that faces the flywheel or an end face that is of the flywheel and that faces the rotor comprises a groove, and the other one of the end face that is of the rotor and that faces the flywheel or the end face that is of the flywheel and that faces the rotor is configured to fasten the drive disk of the torsional vibration damper; and
the groove is configured to accommodate the drive disk and the plurality of circumferential buffer members, the circumferential buffer member is configured to elastically connect the drive disk to the groove in a circumferential direction of the drive disk, the groove is configured to fasten one end of the plurality of circumferential buffer members, and the drive disk is configured to fasten the other end of the plurality of circumferential buffer members.

2. The disk generator according to claim 1, wherein in a circumferential direction of the generator, the plurality of circumferential buffer members are arranged at intervals between an outer peripheral wall of the drive disk and an inner peripheral wall of the groove; and in a radial direction of the generator, two ends of each circumferential buffer member are respectively fastened to the inner peripheral wall of the groove and the outer peripheral wall of the drive disk.

3. The disk generator according to claim 1 or 2, wherein at least one of the inner peripheral wall of the groove or the outer peripheral wall of the drive disk comprises a plurality of radial stoppers, and each radial stopper is configured to fasten one end of one circumferential buffer member; and
the plurality of radial stoppers on the inner peripheral wall of the groove or the outer peripheral wall of the drive disk are arranged at intervals in the circumferential direction of the generator.

4. The disk generator according to claim 3, wherein in the radial direction of the generator, a distance between each radial stopper on the inner peripheral wall of the groove and an axis of the drive disk is less than a distance between each radial stopper on the outer peripheral wall of the drive disk and the axis of the drive disk.

5. The disk generator according to claim 3 or 4, wherein in an axial direction of the engine, the plurality of radial stoppers on the inner peripheral wall of the groove and the plurality of radial stoppers on the outer peripheral wall of the drive disk are arranged at intervals, and a sum of a thickness of the radial stopper on the inner peripheral wall of the groove and a thickness of the radial stopper on the outer peripheral wall of the drive disk is less than a depth of the groove.

6. The disk generator according to any one of claims 3 to 5, wherein in the circumferential direction of the generator, widths of the radial stoppers are equal, and in the radial direction of the generator, each radial stopper on the inner peripheral wall of the groove is aligned with one radial stopper on the outer peripheral wall of the drive disk.

7. The disk generator according to any one of claims 3 to 6, wherein each circumferential buffer member comprises a circumferential spring and two sliding blocks, the two sliding blocks are respectively fastened to two ends of the circumferential spring, the circumferential spring is configured to elastically connect the two sliding blocks, one of the two sliding blocks is configured to fasten the radial stopper on the inner peripheral wall of the groove, and the other sliding block is configured to fasten the radial stopper on the outer peripheral wall of the drive disk.

8. The disk generator according to claim 7, wherein at least one circumferential spring comprises a plurality of segments of sub-springs, the plurality of segments of sub-springs are sequentially arranged in the circumferential direction of the generator, the circumferential buffer member comprises a middle sliding block, and the middle sliding block is arranged between two adjacent segments of sub-springs in the circumferential direction of the generator.

9. The disk generator according to claim 7 or 8, wherein in the axial direction of the generator, a thickness of the sliding block is greater than a distance between the radial stopper on the outer peripheral wall of the drive disk and a bottom of the groove.

10. The disk generator according to any one of claims 7 to 9, wherein in the axial direction of the generator, the thickness of the sliding block is less than or equal to the depth of the groove, and is greater than or equal to the sum of the thickness of the radial stopper on the inner peripheral wall of the groove and the thickness of the radial stopper on the outer peripheral wall of the drive disk.

11. The disk generator according to any one of claims 1 to 10, wherein the generator comprises a housing, and the housing comprises a sleeve and an end cover that are connected to each other;
the end cover is arranged on a side that is of the stator and that is away from the rotor in the axial direction of the generator, and the end cover is configured to fasten the stator; and
the sleeve is sleeved on peripheries of the stator, the rotor, and the flywheel, an axial length of the sleeve is greater than a spacing between the flywheel and the end cover, and the sleeve is configured to shield an axial gap between the rotor and the flywheel.

12. The disk generator according to any one of claims 1 to 11, wherein the generator comprises a motor shaft; in the axial direction of the generator, one end of the motor shaft is configured to pass through the stator and is rotatably connected to the housing, and the other end of the motor shaft comprises a bearing accommodating hole; and the bearing accommodating hole is configured to accommodate a bearing; and
the end face that is of the rotor and that faces the flywheel comprises the groove, and the bearing is configured to be in coaxial transmission with the drive disk; or
the end face that is of the flywheel and that faces the rotor comprises the groove, and the bearing is configured to be in coaxial transmission with the flywheel.

13. The disk generator according to claim 12, wherein the end face that is of the rotor and that faces the flywheel comprises the groove, the bearing is configured to be in coaxial transmission with an axial connection portion of the drive disk, the generator comprises a sealing ring, the sealing ring is fastened to the bottom of the groove, an inner diameter of the sealing ring is greater than or equal to an outer diameter of the axial connection portion, and the sealing ring is configured to shield a radial gap between the axial connection portion and the rotor; or
the generator comprises a groove cover, the groove cover is located between the flywheel and the rotor in the axial direction of the generator, an outer diameter of the groove cover is greater than a diameter of the inner peripheral wall of the groove, an inner diameter of the groove cover is less than a diameter of the outer peripheral wall of the drive disk, and the groove cover is fastened to a groove opening of the groove and is configured to shield a radial gap between the inner peripheral wall of the groove and the outer peripheral wall of the drive disk.

14. A hybrid powertrain, wherein the hybrid powertrain comprises the disk generator according to any one of claims 1 to 13 and at least one of an engine or a drive motor; and
a crankshaft of the engine is connected to a flywheel of the disk generator, and the engine is configured to drive the flywheel to drive a rotor of the disk generator to rotate relative to a stator; or
the drive motor is configured to rotate with a crankshaft of the engine, or is configured to drive wheels of a vehicle by using electric energy generated by the disk generator.

15. A vehicle, wherein the vehicle comprises wheels, a power battery, and the hybrid powertrain according to claim 14;
an engine of the hybrid powertrain is further configured to directly drive the wheels; and
the power battery is configured to be charged by using electric energy generated by a disk generator.
